(19) Europäisches Patentamt
European Patent Office
Office européen des brevets

(11) **EP 2 715 327 B1**

(12) **FASCICULE DE BREVET EUROPEEN**

(45) Date de publication et mention de la délivrance du brevet:
**27.04.2016 Bulletin 2016/17**

(21) Numéro de dépôt: **12712315.6**

(22) Date de dépôt: **02.03.2012**

(51) Int Cl.:
**G01N 25/48** (2006.01)

(86) Numéro de dépôt international:
**PCT/FR2012/050440**

(87) Numéro de publication internationale:
**WO 2012/160279 (29.11.2012 Gazette 2012/48)**

(54) **PROCEDE DE CARACTERISATION D'UN COPOLYMERE D'ETHYLENE ET D'ACETATE DE VINYLE**

VERFAHREN ZUR CHARAKTERISIERUNG EINES ETHYLEN- UND VINYLACETATCOPOLYMERS

METHOD FOR CHARACTERIZING AN ETHYLENE AND VINYL ACETATE COPOLYMER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.05.2011 FR 1154579**

(43) Date de publication de la demande:
**09.04.2014 Bulletin 2014/15**

(73) Titulaires:
• **Arkema France**
  **92700 Colombes (FR)**
• **Commissariat à l'Énergie Atomique et aux Énergies Alternatives**
  **75015 Paris (FR)**

(72) Inventeurs:
• **HIDALGO, Manuel**
  **F-69530 Brignais (FR)**
• **MEDLEGE, Franck**
  **F-38240 Meylan (FR)**

(74) Mandataire: **Gavin, Pablo**
  **ARKEMA FRANCE**
  **Propriété Industrielle**
  **420 Rue d'Estienne d'Orves**
  **92705 Colombes Cedex (FR)**

(56) Documents cités:
• **GOULD T E ET AL: "Characterization of mouthguard materials: Thermal properties of commercialized products", DENTAL MATERIALS, ELSEVIER, vol. 25, no. 12, 1 décembre 2009 (2009-12-01), pages 1593-1602, XP026710181, ISSN: 0109-5641, DOI: 10.1016/J.DENTAL.2009.08.003 [extrait le 2009-09-30] cité dans la demande**
• **REYES-LABARTA J A ET AL: "DSC and TGA study of the transitions involved in the thermal treatment of binary mixtures of PE and EVA copolymer with a crosslinking agent", POLYMER, ELSEVIER SCIENCE PUBLISHERS B.V, GB, vol. 47, no. 24, 8 novembre 2006 (2006-11-08), pages 8194-8202, XP025232388, ISSN: 0032-3861, DOI: 10.1016/J.POLYMER.2006.09.054 [extrait le 2006-11-08] cité dans la demande**
• **Hengyu Li ET AL: "Towards in-line determination of EVA Gel Content during PV modules Lamination Processes", Proceedings of the 25th PVSC Conference, 1 janvier 2010 (2010-01-01), XP055011482, Extrait de l'Internet: URL:http://infoscience.epfl.ch/record/1550 65/files/paper_581.pdf [extrait le 2011-11-08]**
• **W. STARK ET AL: "Investigation of Ethylene/Vinyl Acetate Copolymer (EVA) by thermal analysis DSC and DMA", POLYMER TESTING, vol. 30, no. 2, 29 décembre 2010 (2010-12-29), pages 236-242, XP055011445, ISSN: 0142-9418, DOI: 10.1016/j.polymertesting.2010.12.003**

- MENG ET AL: "Differential scanning calorimetry (DSC) and temperature-modulated DSC study of three mouthguard materials", DENTAL MATERIALS, ELSEVIER, vol. 23, no. 12, 1 novembre 2007 (2007-11-01), pages 1492-1499, XP022324505, ISSN: 0109-5641, DOI: 10.1016/J.DENTAL.2007.01.006

- C SANDU: "Modeling differential scanning calorimetry", THERMOCHIMICA ACTA, vol. 159, no. 1, 1 janvier 1990 (1990-01-01), pages 267-298, XP055011745, ISSN: 0040-6031, DOI: 10.1016/0040-6031(90)80115-F

**Description**

La présente invention concerne le domaine des copolymères d'éthylène et d'acétate de vinyle. Par copolymère d'éthylène et d'acétate de vinyle on entend tout copolymère à base de ces deux monomères comme composants principaux ou majoritaires. Ainsi, le terme copolymères d'éthylène et d'acétate de vinyle comprend également les copolymères issus de 3 comonomères (terpolymères) ou plus, où l'éthylène et l'acétate de vinyle sont les deux monomères principaux ou majoritaires.

Plus particulièrement, l'invention se rapporte à un procédé de caractérisation d'un copolymère d'éthylène et d'acétate de vinyle utilisant une technique d'analyse par calorimétrie différentielle. L'invention se rapporte également à un dispositif d'analyse par calorimétrie différentielle, un procédé de contrôle de la qualité d'un copolymère d'éthylène et d'acétate de vinyle utilisé dans la fabrication d'un câble ou d'un module photovoltaïque, et enfin un procédé de contrôle de la tenue dans le temps d'un copolymère d'éthylène et d'acétate de vinyle utilisé dans la fabrication d'un module photovoltaïque.

Certains industriels utilisant et réticulant en même temps des films ou des granulés de copolymère d'éthylène et d'acétate de vinyle (noté EVA par la suite) ont besoin de connaitre, en absolu ou en relatif, l'état d'avancement de la réaction de réticulation du copolymère. Ils peuvent également avoir besoin de connaitre la proportion d'acétate de vinyle dans le copolymère ou, encore sa fluidité ou sa masse moléculaire, ces deux dernières caractéristiques étant intimement liées. En effet, les propriétés mécaniques, thermiques et optiques des copolymères d'EVA découlent notamment du taux de réticulation, mais aussi du taux d'acétate de vinyle présent, ou encore de la masse moléculaire. Parmi ces industriels, on peut par exemple citer les fabricants de câbles ou bien les fabricants de modules photovoltaïques.

Dans le domaine des modules photovoltaïques, le procédé de fabrication de modules photovoltaïques le plus couramment utilisé, selon la technologie silicium cristallin, consiste à empiler les différentes couches constitutives du module (face avant / encapsulant / cellules photovoltaïques / encapsulant / face arrière), puis à laminer l'empilement sous vide dans un laminateur. Dans le laminateur, l'EVA encapsulant fond, recouvre les cellules photovoltaïques et réticule ensuite pour acquérir sa structure finale de réseau réticulé amortissant. Ainsi, les cellules photovoltaïques sont complètement encapsulées dans un polymère caoutchoutique relativement mou les isolant de l'environnement et les protégeant des chocs et contraintes mécaniques. En fonctionnement, la température des modules photovoltaïques peut atteindre ou dépasser les 100°C. Par conséquent, pour assurer au mieux ses fonctions de protection des cellules, l'EVA doit avoir une bonne tenue thermomécanique, ce qui nécessite un taux de réticulation suffisant. La réticulation de l'EVA permet en effet de l'empêcher de fluer à froid comme à chaud. De plus si l'EVA est mal réticulé, il reste des quantités trop importantes d'agent réticulant, en général des peroxydes organiques. Or, une quantité résiduelle trop importante de ces peroxydes organiques dans l'EVA peut entraîner un vieillissement prématuré des modules photovoltaïques par dégradation des matériaux, notamment polymères, du fait des réactions chimiques possibles avec les peroxydes (comme l'oxydation) ou leurs produits de décomposition. Ce vieillissement prématuré peut se traduire par des défauts mécaniques, électriques ou optiques, comme, par exemple, une prise de coloration jaune. Enfin, lors de la lamination, les caractéristiques et la formulation de l'EVA utilisé comme, par exemple, le type et concentration d'agent réticulant présent, ainsi que les conditions opérationnelles telles que le vide, la température et le temps de lamination en une ou plusieurs séquences, sont des variables pouvant conduire à des taux de réticulation différents pour l'EVA. La connaissance et la maîtrise du taux de réticulation de l'encapsulant à base d'EVA, et des propriétés qui en découlent, sont donc très importantes pour le fabricant de modules.

L'EVA utilisé par l'industrie photovoltaïque est un copolymère comprenant un taux d'acétate de vinyle et présentant une masse moléculaire tels que le copolymère présente une bonne fluidité pendant la mise en oeuvre, c'est-à-dire avant sa réticulation, ainsi qu'une bonne transparence et de bonnes propriétés mécaniques après sa réticulation. La température de formulation et de mise en oeuvre de l'EVA, par exemple pour la fabrication de films, est une conséquence directe de sa composition et de sa fluidité. Il est particulièrement important que cette température soit ajustée pour éviter que les agents réticulants de la formulation, par exemple des peroxydes, commencent à réticuler le matériau à ce stade. Des taux d'acétate de vinyle couramment utilisés sont compris entre 24 et 42 % en poids, et de préférence compris entre 28 et 35 % en poids, et de manière encore plus préférée, le taux est de 33 % en poids. Par conséquent, la connaissance et la maitrise du taux d'acétate de vinyle dans le polymère, et des propriétés qui en découlent, sont également très importantes pour le fabricant de modules.

Il existe plusieurs méthodes connues permettant d'assurer un suivi de la réaction de réticulation de l'EVA. L'adaptation de ces méthodes pour faire un suivi lors du processus d'encapsulation de cellules photovoltaïques a fait l'objet de nombreuses études. Parmi ces méthodes, il y a la méthode du gonflement par solvant basée sur l'équation de Flory-Huggins-Rehner. Cette méthode permet, moyennant la connaissance du paramètre d'interaction polymère/solvant (paramètre $\chi 12$ de Flory-Huggins), l'obtention directe de la densité molaire de noeuds de réticulation chimique, $\nu$. Cependant, cette méthode implique la manipulation de solvants, souvent volatils et/ou toxiques, et les mesures se font à l'équilibre de gonflement, ce qui peut prendre beaucoup de temps. De plus, le paramètre d'interaction polymère/solvant de Flory-Huggins devant être bien connu, cela constitue souvent un frein à l'utilisation de cette méthode. S'agissant de polymères semi-cristallins, comme l'EVA, le gonflement à température ambiante pourrait être une fonction des noeuds de réticulation chimiques, mais également des noeuds physiques apportés par la cristallinité, ce qui compliquerait l'analyse des résultats ou obligerait à travailler en température. Enfin, cette méthode de gonflement étant basée sur le gonflement d'un réseau réticulé, elle est surtout utilisable pour des réseaux bien réticulés, mais son utilisation pour des polymères faiblement ou moyennement réticulés peut causer des erreurs importantes.

Une autre méthode existante consiste à mesurer des modules mécaniques par rhéologie. Cette technique donne également accès directement à la densité molaire de noeuds de réticulation, $\nu_m$. Elle ne nécessite pas l'utilisation de solvants ni la connaissance de paramètres au préalable. Cette méthode est très sensible aux variations de taux de réticulation et nécessite très peu de matière pour les mesures. Cependant, elle exige une connaissance et une expérience solides en rhéologie, ainsi que l'utilisation d'appareils coûteux et sophistiqués. Les échantillons doivent en outre être soigneusement préparés et de bonne qualité. Ils doivent notamment présenter des dimensions connues et une épaisseur constante pour assurer une bonne fiabilité des mesures. Cette méthode est par conséquent complexe à mettre en oeuvre.

Du fait des inconvénients liés aux méthodes d'analyse directe, les industriels utilisent souvent des méthodes indirectes pouvant être corrélées à la densité de noeuds de réticulation. Parmi ces méthodes indirectes, une méthode très connue de l'homme de l'art est celle de la mesure du taux de gels, consistant à mesurer la proportion insoluble d'un échantillon de polymère réticulé. Pour ce faire, on tente de dissoudre un échantillon dans un solvant, la proportion de l'échantillon n'ayant pas été dissoute (taux de gels) étant considérée comme une mesure du taux de réticulation du polymère. Cette méthode de mesure du taux de gels ne fait appel à aucun modèle dont les paramètres devraient être connus. Elle ne nécessite pas de connaissances théoriques poussées. Par contre, elle implique la manipulation de solvants. Le plus souvent cette méthode nécessite de travailler à des températures élevées. Pour l'EVA, en particulier, des mesures de bonne qualité sont obtenues uniquement lorsque l'extraction s'effectue à des températures suffisamment élevées, pour s'assurer que les parties cristallines de l'EVA, non liées au réseau réticulé, se dissolvent et ne soient pas comptées comme des insolubles de réticulation. De plus, les solvants utilisés, tels que le toluène, le xylène, ou le tétrahydrofurane par exemple, ne sont pas exempts de danger. Ils sont notamment inflammables et toxiques. Bien que moins longues que les mesures du gonflement par solvant, les extractions au solvant sont des opérations qui nécessitent un temps minimum de plusieurs heures, typiquement plus de 12 heures, sans compter le temps d'installation ou de remise en état de l'outil d'extraction au solvant, et doivent être effectuées par un personnel qualifié. Les montages doivent être installés dans des postes bien ventilés, postes qui sont propres à un laboratoire de chimie et qui ne peuvent pas être installés facilement à côté de l'outil de production. L'utilisation de solvants implique en outre la nécessité de les retraiter après utilisation, ce qui génère un surcoût d'opération non négligeable.

Une nouvelle méthode utilisant une technique d'analyse par calorimétrie différentielle DSC (acronyme anglais pour « Differential Scanning Calorimetry ») a été étudiée comme méthode de suivi du taux de réticulation de l'EVA pour pallier aux inconvénients des méthodes connues. Une telle méthode présente en effet plusieurs avantages par rapport aux méthodes d'analyses existantes. En particulier, cette méthode n'utilise pas de solvant. Les appareils de DSC permettant de faire les mesures sont beaucoup moins chers que des rhéomètres par exemple, et leur utilisation est beaucoup plus simple, ne nécessitant pas un niveau d'expertise de la part des utilisateurs.

La technique d'analyse par DSC est une technique calorimétrique dynamique consistant à mesurer le flux de chaleur nécessaire pour maintenir à la même température une capsule fermée contenant l'échantillon à analyser et le même type de capsule fermée sans échantillon. Dans sa configuration la plus couramment utilisée, la mesure du flux de chaleur s'effectue tout au long d'une rampe, montante ou descendante, de température en fonction du temps. Pendant le balayage en température, des phénomènes thermiques liés à des transformations subies par l'échantillon ont lieu. Ces phénomènes thermiques sont par exemple un changement de phase, une réaction chimique, ou une transition vitreuse pour les polymères amorphes. Lors de ces phénomènes thermiques, l'échantillon absorbe ou dégage de la chaleur. L'appareil compense alors cette variation de chaleur pour maintenir constantes les températures de l'échantillon et de la référence. Cela se traduit, dans l'enregistrement du flux de chaleur en fonction de la température, par un écart par rapport à la ligne de base. Cet écart peut avoir des formes et des intensités différentes. Sur les figures décrites dans les exemples ci-dessous et représentant des thermogrammes d'échantillons analysés, les phénomènes endothermiques sont orientés vers le bas alors que les phénomènes exothermiques sont orientés vers le haut. Les changements de phase de type fusion et évaporation sont des phénomènes endothermiques. En revanche, les changements de phase de type cristallisation, ainsi que la plupart des réactions chimiques, comme des réticulations ou des décompositions, sont des phénomènes exothermiques. Les transitions vitreuses des polymères correspondent à un changement de capacité calorifique et elles apparaissent comme un saut du niveau de la ligne de base du thermogramme. Concernant la forme, mis à part les transitions vitreuses qui correspondent en DSC à des sauts de capacité calorifique, beaucoup de phénomènes se traduisent par des pics de forme plus ou moins régulière dans un thermogramme de DSC. Evidemment, les transformations subies par l'échantillon peuvent se superposer dans un thermogramme lorsqu'elles se produisent à des températures proches.

L'article intitulé « A new method for measuring cross-link density in ethylene vinyl acetate-based encapsulant » par Zhiyong Xia, Daniel W. Cunningham et John H. Wohlgemuth, publié notamment sur le site internet www.pv.tech.org, décrit cette nouvelle méthode de détermination du taux de réticulation d'un encapsulant d'EVA réticulable utilisant la technique d'analyse par DSC. Cette méthode utilise le fait que, pour les applications comme encapsulant de cellules photovoltaïques, un EVA est, pratiquement toujours, formulé avec des peroxydes pour provoquer sa réticulation. Elle est basée sur l'idée que l'EVA, même après avoir subi un cycle de lamination pour le réticuler, contient encore du peroxyde non décomposé, dit peroxyde résiduel. La proportion typique de peroxyde résiduel dans un EVA réticulé est estimée à 30 % du peroxyde contenu par l'EVA au départ, c'est-à-dire avant réticulation. Cette méthode part donc du principe que moins il reste de peroxyde résiduel, après la lamination, plus l'EVA aura réticulé pendant cette opération. La méthode consiste à suivre, par DSC, la trace thermique de la réaction de décomposition du peroxyde, décomposition qui se produit à des températures supérieures à 100°C, plus particulièrement entre 150°C et 180°C. La mesure par DSC permet tout d'abord de déterminer l'enthalpie totale de réticulation, amorcée par la décomposition du peroxyde, en faisant la mesure sur un échantillon d'EVA « frais », c'est-à-dire un EVA non réticulé et supposé ayant toute sa charge de peroxyde disponible. Elle permet ensuite de mesurer l'enthalpie de sur-réticulation par décomposition, dans l'appareil de mesure par DSC, du peroxyde résiduel d'un EVA ayant déjà subi une réticulation au préalable, en particulier dans un laminateur. La comparaison d'enthalpies de réticulation entre les deux échantillons, « frais » et « laminé » permet d'avoir une estimation du niveau de réticulation subi par l'échantillon dans le laminateur. Lorsque l'on est sûr de la formulation utilisée dans l'EVA (même peroxyde, mêmes concentrations), la méthode peut s'appliquer en relatif, par comparaison des enthalpies de sur-réticulation d'échantillons laminés dans différentes conditions, sans avoir besoin de se référer à l'EVA « frais ».

La méthode décrite dans cet article présente cependant plusieurs inconvénients. En particulier, cette méthode est très indirecte car elle est basée sur la décomposition du peroxyde présent comme additif amorceur de réticulation dans l'EVA, et non pas sur la structure même de l'EVA qui est un polymère linéaire semi-cristallin avant réticulation, et un réseau réticulé comportant des zones cristallines après réticulation. La méthode nécessite en outre la présence de peroxyde résiduel, dans les échantillons ayant subi une première réticulation, ainsi que la certitude que la seule cause de disparition de peroxyde est l'opération de réticulation dans le laminateur. Elle ne peut donc pas fonctionner pour des EVA ne contenant plus de peroxyde résiduel, et/ou l'ayant perdu par d'autres phénomènes (comme le vieillissement au stockage ou après lamination) que la décomposition dans le laminateur, ce qui implique une connaissance au préalable de l'histoire thermique de l'échantillon. Or, cette connaissance n'est pas toujours acquise pour le fabricant de modules qui suppose en général que l'EVA qu'il reçoit est « frais », c'est-à-dire n'ayant pas subi de décomposition de peroxyde. Lors de la détermination du taux de réticulation par cette méthode, la supposition doit être faite que la réaction de réticulation de l'EVA « frais » dans le laminateur, pendant la réticulation industrielle dans le but de fabriquer un module, se passe de la même façon que la sur-réticulation dans l'appareil de DSC partant d'un EVA déjà réticulé et du peroxyde résiduel. Cette supposition implique, notamment, de considérer que l'enthalpie de sur-réticulation mesurée en DSC pour un échantillon réticulé au préalable est une fraction de l'enthalpie totale mesurée en DSC lorsque l'EVA « frais » est réticulé dans l'appareil de DSC. Or, cette supposition est loin d'être indiscutable. En effet, ainsi qu'il a été démontré dans l'article intitulé « Assessment of Avrami, OZAWA and AVRAMI-OZAWA equations for determination of EVA crosslinking kinetics from DSC measurements » de Bianchi, O., OLIVEIRA, R.V.B., FIORIO, R., DE N. MARTINS, J., ZATTERA, A.J. et CANTO, L.B., publié dans Polymer Testing 27 (2008), 722-729, les enthalpies de la réaction de réticulation de l'EVA par un peroxyde, mesurées par DSC ne sont pas additives selon la quantité de peroxyde. Ainsi, pour une vitesse de rampe donnée, l'enthalpie de la réaction avec 2 % de peroxyde n'est pas 2 fois plus élevée que la même enthalpie avec 1 % de peroxyde et c'est la même chose pour 4 % de peroxyde par rapport à 2 fois 2 % de peroxyde. De plus, comme la méthode repose sur la décomposition du peroxyde présent dans l'EVA, elle nécessite une parfaite traçabilité en termes d'origine, c'est-à-dire le fournisseur de l'EVA, et de grade, ainsi qu'une mesure d'enthalpie de décomposition de l'EVA « frais » pour chaque formulation (grade, fournisseur). Même lorsqu'elle est utilisée en relatif, c'est-à-dire, en comparant entre eux des échantillons réticulés, les limites de la méthode apparaissent lorsque l'on sait que pour l'utiliser de cette façon, il est nécessaire d'être sûr que la formulation de l'EVA des échantillons comparés, est la même en type et concentration initiale de peroxyde. La méthode n'est pas applicable pour l'analyse d'échantillons provenant de modules ayant vieilli ou provenant du terrain, du fait que ces modules peuvent avoir perdu, ou vu diminuer par vieillissement, leur taux de peroxyde résiduel. La technique d'analyse est destructive et l'échantillon analysé n'est plus disponible pour des mesures de répétabilité sur le même échantillon. Enfin, la réticulation de l'EVA par d'autres moyens que l'utilisation de peroxydes comme par exemple, la réticulation par radiation, ne peut pas être suivie par cette méthode qui ne traduit pas des changements structuraux de l'EVA réticulé lui-même.

On connaît également l'article intitulé « Characterization of mouthguard materials : thermal properties of commercialized products" publié en août 2009 par Trenton E. Gould, Scott G. Piland, Junghwan Shin, Olivia McNair, Charles E. Hoyle, Sergei Nazarenko. Cet article divulgue des protecteurs bocaux, objets massifs utilisés dans un domaine de température étroit (37 °C), principalement en EVA dont le taux d'acétate de vinyle est prédéterminé de l'ordre de 18%. Une partie de cet article mentionne l'utilisation de la méthode DSC mais à aucun moment l'EVA n'est réticulé. Il est simplement indiqué que les EVA de cette étude (portant sur les propriétés thermomécaniques des protecteurs bocaux constitués essentiellement en EVA) présentent les transitions thermiques bien connues de transition vitreuse et fusion (pour les rampes montantes en température) et de cristallisation (pour les rampes descendantes en température).

Dans cette étude, les EVA ne sont jamais réticulés et présentent un taux unique d'acétate de vinyle de sorte que la caractérisation par la méthode DSC de ces deux aspects (réticulation et taux d'acétate de vinyle) n'est absolument pas étudiée, à l'instar de la caractérisation par la méthode DSC de la fluidité ou de la masse des EVA. Enfin, cet article divulgue une analyse des EVA basée essentiellement sur sa zone de fusion et s'intéresse uniquement à l'effet des évolutions cristallines avec le temps sur la capacité du matériau à absorber notamment des chocs.

On connaît enfin l'article intitulé « DSC and TGA study of the transitions involved in the thermal treatment of binary mixtures of PE and EVA copolymer with a crosslinking agent", publié en 2006, par J.A. Reyes-Labarta, M.M. Olaya et A. Marcilla. Cet article se situe dans le domaine des mousses polymères à base de polyethylene ou d'EVA. Ici, les EVA sont réticulés mais l'étude porte uniquement sur la zone de fusion, la zone de cristallisation n'étant absolument pas considérée. A méthode DSC pour un suivi/contrôle du taux d'acétate de vinyle ou de la fluidité/masses molaires des polymères.

L'invention a donc pour but de remédier à au moins un des inconvénients de l'art antérieur. L'invention vise notamment à permettre une caractérisation d'un copolymère d'EVA, au moyen d'un suivi du taux de réticulation sans les inconvénients des méthodes précitées. Elle permet également une caractérisation d'un copolymère d'EVA au moyen d'une détermination du taux d'acétate de vinyle et/ou de la masse moléculaire, et cela de manière fiable, rapide, et facile à mettre en oeuvre.

A cet effet, l'invention a pour objet un procédé de caractérisation d'un copolymère d'éthylène et d'acétate de vinyle (EVA) utilisant une technique d'analyse par calorimétrie différentielle, caractérisé en ce que ledit procédé comporte les étapes consistant à :

- soumettre un échantillon dudit copolymère d'EVA à un traitement thermique, par montées et descentes de température à vitesse constante, compris entre une température limite inférieure de -80°C et une température limite supérieure de 120°C, de préférence entre -70°C et 100°C, pour l'obtention d'un thermogramme,
- sur le thermogramme obtenu, relever une zone de températures correspondant à une zone (CR) de températures de cristallisation,
- caractériser la zone (CR) de température de cristallisation, présentée sous la forme d'un pic de cristallisation, ledit pic étant déterminé par une température du maximum (Tc) dudit pic, une température de démarrage (Td) dudit pic, une température de croisement (Tt) de deux droites tangentes au versant descendant dudit pic et un facteur de forme (FF) dudit pic,
- comparer ladite zone (CR) de températures de cristallisation à une zone correspondante de températures de cristallisation sur des thermogrammes de référence, ou à une zone de températures correspondante de températures de cristallisation sur des thermogrammes d'autres échantillons,
- en fonction du résultat de la comparaison, déterminer plusieurs valeurs de caractéristique(s) dudit échantillon de copolymère d'EVA, dont une est un niveau de réticulation dudit échantillon et une est un taux d'acétate de vinyle dudit échantillon.

Lorsque le thermogramme de l'échantillon à caractériser est comparé à des thermogrammes de référence obtenus pour des échantillons de référence dont le taux de réticulation est connu, le « niveau de réticulation » correspond à la valeur du taux de réticulation de l'échantillon. En revanche, lorsque le thermogramme de l'échantillon à caractériser est comparé de manière relative à des thermogrammes obtenus pour d'autres échantillons dont le taux de réticulation est inconnu, le « niveau de réticulation » correspond au degré de réticulation de l'échantillon à caractériser par rapport aux autres échantillons.

Selon une possibilité offerte par l'invention, on pourra envisager, sur le thermogramme obtenu, en complément du relevé de la zone de températures correspondant à la zone CR de températures de cristallisation, un relevé d'une zone de températures correspondant à une zone TV de températures de transition et/ou de une zone FU de températures de fusion.

Dans cette hypothèse, les zones TV et FU sont comparés, à l'instar de la zone CR, respectivement à une zone de transition vitreuse et de température de fusion sur des thermogrammes de référence ou à une zone respectivement correspondante sur des thermogrammes d'autres échantillons.

Avantageusement, sur le thermogramme obtenu, une zone (TV) de température de transition vitreuse et une zone (FU) de températures de fusion sont relevées pour être comparées respectivement à une zone correspondante de températures de transition vitreuse ou de température de fusion sur des thermogramme de référence ou sur des thermogrammes d'autres échantillons ; ces zones (TV) et (FU) faisant, à l'instar de la zone (CR), l'objet d'une étape de caractérisation.

Il doit être noté notamment que le procédé de l'invention illustré à l'exemple 5 utilise la seule zone CR pour réaliser ses étapes de relever et de comparaison en vue de déterminer une pluralité de caractéristiques de l'échantillon.

Ainsi, le fait de faire des mesures à des températures maximales ne dépassant pas les 120°C et, de préférence, ne dépassant pas les 100°C, implique que le procédé de caractérisation de l'EVA par DSC de l'invention ne présente pas les inconvénients de l'art antérieur mentionnés ci-dessus, liés à la réticulation se produisant dans l'appareil de DSC. Ce nouveau procédé ne dépend pas de la formulation ou de l'histoire thermique des échantillons d'EVA. De plus, ce procédé, puisque basé sur des changements structuraux provoqués par la réticulation sur l'EVA, peut être appliqué à d'autres modes de réticulation que celui de la réaction provoquée par des peroxydes, comme par exemple, la réticulation par irradiation. Ce procédé est en outre simple, rapide et efficace.

Pour faire les mesures on utilise par exemple un appareil de DSC pouvant chauffer jusqu'à au moins 100°C et pouvant refroidir jusqu'à au moins -70°C, à l'aide d'un système de réfrigération permettant un fonctionnement stable, tel qu'un bain réfrigérant à fluide frigorifique. De tels systèmes sont proposés par des fabricants d'appareils de DSC, comme par exemple, TA INSTRUMENTS.

Un tel appareil comporte par exemple un module de supervision agencé pour piloter les étapes du procédé de caractérisation selon l'invention. Ce module de supervision peut par exemple se présenter sous la forme d'un processeur programmé à cet effet. Un ensemble d'instructions programme d'ordinateur permet au processeur d'effectuer différentes opérations décrites dans ce qui suit en relation avec le module de supervision. Ainsi, l'interprétation du thermogramme de l'échantillon analysé et sa comparaison aux thermogrammes de référence, ou à d'autres thermogrammes obtenus pour d'autres échantillons, peut être faite au moyen d'un programme d'ordinateur comprenant des instructions de code de programme exécutés par un processeur, le processeur pouvant être disposé dans le module de supervision de l'appareil de DSC.

Parmi les valeurs de caractéristiques de l'échantillon, déterminées à l'issue de l'étape de comparaison, il y a le niveau de réticulation de l'échantillon ainsi que le taux d'acétate de vinyle présent dans ledit échantillon et avantageusement l'une au moins des valeurs de caractéristiques suivantes: la fluidité et/ou la masse moléculaire dudit échantillon.

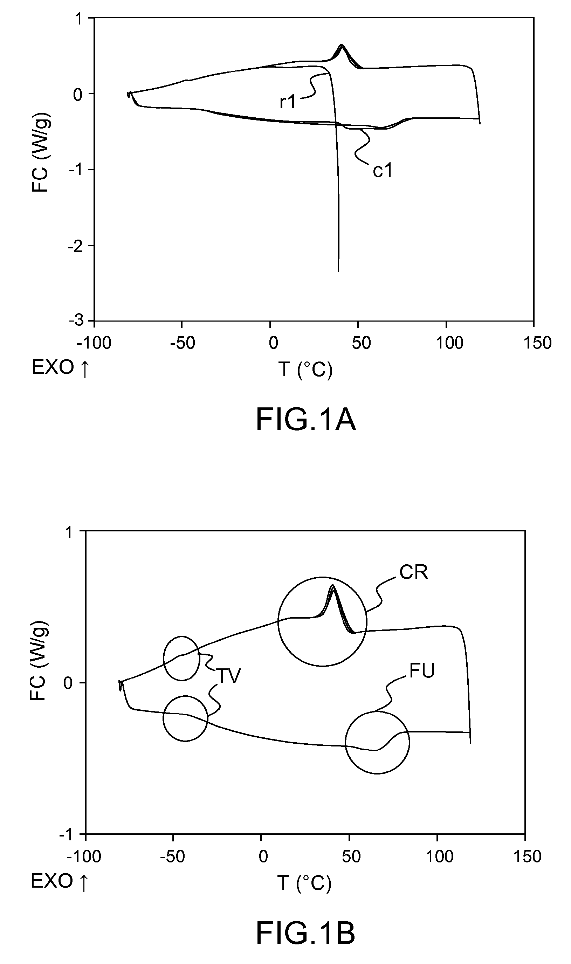

Le traitement thermique appliqué sur l'échantillon consiste à faire des cycles thermiques de chauffage/refroidissement, typiquement entre -80°C et 120°C, de préférence entre -70 °C et 100°C sur un échantillon d'EVA « frais » ou réticulé d'une masse comprise entre 2 et 15 mg, et de préférence entre 6 et 12 mg. Pour la plupart des EVA commercialement disponibles, les limites -70°C / +100°C permettent de faire apparaître sur les thermogrammes obtenus 3 phénomènes thermiques. Ainsi, pendant les périodes de chauffage, il apparait une zone de températures correspondant à une zone de températures de transition vitreuse de la partie amorphe du copolymère. Cette zone apparait à très basse température, typiquement entre -50 et -30°C pour le début de la transition. Cette zone est par exemple référencée TV sur la figure 1 B décrite ci-dessous en regard de l'exemple 1. Une autre zone de températures correspondant à une zone de températures de fusion de la partie cristalline apparait également au cours des périodes de chauffage. Cette zone peut couvrir une zone très large pouvant chevaucher la zone de températures de transition vitreuse, mais elle présente un pic dont le sommet se situe entre 45 et 95°C. Cette zone est par exemple référencée FU sur la figure 1 B. Pendant les périodes de refroidissement une troisième zone de températures apparait. Cette zone correspond à une zone de températures de recristallisation de la partie cristalline de l'échantillon. Cette zone présente également un pic qui se situe entre 75°C et 20°C. Elle est par exemple référencée CR sur la figure 1 B. La période de refroidissement fait également apparaitre la zone de températures correspondant à la zone de températures de transition vitreuse de la partie amorphe du polymère (référencée TV). Cette zone se situe dans la même zone de températures que pour la montée en température, mais elle est moins visible sur le thermogramme que lors du chauffage.

Le procédé de caractérisation consiste à comparer la zone CR et éventuellement les deux zones de températures TV et FU, repérées sur le thermogramme de l'échantillon analysé, respectivement à 3 zones correspondantes sur les thermogrammes de référence. En fonction du résultat des comparaisons, on vérifie et/ou on détermine la (ou les) valeur(s) de la (ou des) caractéristique(s) dudit échantillon de copolymère d'EVA.

Le traitement thermique appliqué sur l'échantillon à analyser est mis en oeuvre par la répétition d'un cycle thermique. Dans un premier temps, l'échantillon est refroidi jusqu'à la température limite inférieure, par exemple -70°C. On laisse alors la température s'équilibrer puis on maintient l'échantillon à cette température pendant au moins une durée prédéterminée qui est de l'ordre de quelques minutes, en général entre 5 et 10 minutes. L'échantillon est ensuite réchauffé jusqu'à la température limite supérieure, par exemple 100°C. La vitesse des rampes de chauffage et de refroidissement est constante et choisie parmi des valeurs comprises entre 5 et 20°C/min, et de préférence, cette vitesse est fixée à 10°C/min. Cette opération, appelée cycle, est répétée au moins 1 autre fois, et, de préférence, au moins 2 autres fois. Enfin, l'échantillon est refroidi jusqu'à une température de fin de test. Typiquement, cette température de fin de test peut être la température ambiante, 25°C par exemple.

Les thermogrammes de référence sont de préférence réalisés préalablement au procédé de caractérisation, en soumettant différents échantillons connus au même traitement thermique que celui qui est appliqué sur l'échantillon à caractériser, de manière à déterminer trois zones de températures de référence : la zone TV de températures de transition vitreuse, la zone FU de températures de fusion et la zone CR de températures de cristallisation ; puis à déterminer, dans la zone choisie pour l'exploitation de données, un ou plusieurs paramètres caractéristiques de la transition sélectionnée. De tels paramètres peuvent être par exemple, l'emplacement de la zone de températures choisie dans l'échelle de températures, le maximum ou le minimum du signal, un ou plusieurs changements de pente ou des points d'inflexion du signal, des croisements entre des droites tangentes au signal, un facteur de forme, une aire sous la courbe (intégrale) entre deux températures correspondant à une valeur d'énergie.

Dans tous les cas, la transition choisie pour l'exploitation des résultats est au moins la zone de températures correspondant à la zone des températures de cristallisation, des valeurs ou des paramètres tels que la température du maximum (Tc) du pic de cristallisation, une température (Td) de démarrage du pic obtenue par le croisement des deux droites tangentes au signal, une température de changement de pente après le maximum du pic de cristallisation (Tt), ou encore, un facteur de forme (FF) dudit pic peuvent être associés à la transition. L'exploitation de la zone de températures correspondant à la zone des températures de cristallisation repérée avec le procédé de l'invention est particulièrement préférée et concernant l'exploitation de la zone de températures de cristallisation, le calcul d'un facteur de forme (FF) du pic, est particulièrement préféré.

Lorsque la zone choisie pour l'exploitation des résultats est la zone de transition vitreuse, TV, des valeurs ou des paramètres tels que la température de transition vitreuse au point le plus bas (Tgi), correspondant au croisement des droites tangentes au signal au niveau de la première inflexion de celui-ci, la température de transition vitreuse au point central (Tgm) correspondant au point central d'inflexion du signal, la température correspondant au croisement des droites tangentes au signal au niveau de la dernière inflexion de celui-ci (Tgf) peuvent être associés à la transition. Lorsque la transition choisie pour l'exploitation des résultats est la zone de fusion (FU), des valeurs ou des paramètres tels que la température du minimum (Tf) du pic de fusion peuvent être associés à la transition.

Les échantillons connus présentent en particulier un taux de réticulation connu et/ou une composition connue, c'est-à-dire un taux d'acétate de vinyle et une masse moléculaire connus. La comparaison des trois zones de températures TV, FU, CR repérées sur le thermogramme de l'échantillon à analyser par rapport aux zones correspondantes des thermogrammes de référence permet ensuite de déterminer l'une au moins des caractéristiques suivantes : le taux de réticulation de l'échantillon analysé, le taux d'acétate de vinyle présent dans l'échantillon analysé et également si l'on souhaite la fluidité ou la masse moléculaire dudit échantillon analysé. Selon une variante de l'invention et concernant le suivi de réticulation, la comparaison peut se faire également entre échantillons différents avec des taux de réticulation inconnus. Leur niveau de réticulation relatif (classement) pourra également être effectué avec le procédé de l'invention, sans faire appel à une comparaison avec des échantillons connus ou de référence.

Selon une variante de l'invention, lorsque seule la zone CR sera exploitée, les cycles de chauffage/refroidissement pourront se faire entre deux températures plus proches que celles des limites données ci-dessus, pourvu que la zone de températures ciblée soit bien encadrée, c'est-à-dire qu'elle permette de récupérer toute l'information nécessaire à faire un suivi fiable de la réticulation ou des autres caractéristiques citées (taux d'acétate de vinyle, fluidité, masse moléculaire). Une des manières de s'assurer que l'information récupérée est fiable, consiste à vérifier la répétabilité des courbes du thermogramme, ainsi que des valeurs (par exemple températures de pics) associées aux transitions et qui permettent de faire le suivi. De préférence, lorsque, pour gagner en temps de test (durée des mesures), les limites des cycles thermiques de chauffage/refroidissement sont rapprochées, une comparaison des résultats sera effectuée avec ceux obtenus par la méthode avec limites de cycles à -70°C/100°C.

De manière surprenante, la demanderesse a constaté que les courbes obtenues suite aux cycles successifs se superposent extrêmement bien à l'exception des échantillons d'EVA peu ou pas réticulés, pour lesquels le pic de cristallisation, notamment, traduit une très légère, mais significative variation d'un cycle à l'autre. Cela se traduit, sur les thermogrammes, par autant de pics très proches mais discernables, que de cycles thermiques pratiqués. Dès que les échantillons commencent à être bien réticulés, ce décalage des pics disparaît et la superposition est alors très bonne pour les trois zones de températures.

Il est bien connu de l'homme de l'art que la température de transition vitreuse (Tg) des polymères a tendance à augmenter en fonction de leur taux de réticulation. Cela a en effet été constaté sur les thermogrammes obtenus pour des échantillons d'EVA analysés, en particulier pour l'EVA à 33 % d'acétate de vinyle commercial, tel que celui utilisé pour les applications d'encapsulation de cellules photovoltaïques. Cependant, l'augmentation de cette température Tg est d'à peine quelques degrés, dans le meilleur des cas, ce qui permet de distinguer un échantillon bien réticulé d'un échantillon « frais » (non réticulé), mais qui rend le suivi, par exemple, à différents taux de réticulation, difficile. Il est également bien connu de l'homme de l'art que la réticulation de l'EVA entraîne une modification de sa phase cristalline. Cette modification peut se traduire par un taux de cristallinité plus faible et/ou par une diminution de la taille des domaines cristallins. Il est généralement admis que l'aire sous la courbe (énergie de changement de phase) d'un pic de fusion ou cristallisation tels qu'obtenus dans un thermogramme de DSC, traduit le taux de cristallinité de l'échantillon et que la position du pic (température du pic de fusion ou cristallisation) est une fonction du taux de cristallinité et de la taille des domaines cristallins.

Il a néanmoins été constaté par la demanderesse, après diverses expériences, que les données provenant de la zone de cristallisation sont suffisantes pour caractériser la réticulation, le taux d'acétate de vinyle et éventuellement la fluidité et les masses moléculaires. Par ailleurs, l'utilisation dans le procédé selon l'invention des seules données de cristallisation permet de réduire considérablement le temps nécessaire au procédé de caractérisation.

Il a été constaté sur les thermogrammes obtenus pour des échantillons d'EVA analysés d'EVA à 33 % d'acétate de vinyle commercial que les températures des maxima des pics de fusion et de recristallisation diminuent en fonction du taux de réticulation. Ces deux paramètres peuvent, ainsi, être utilisés pour le suivi de la réticulation selon le procédé décrit ici. En revanche, l'utilisation de l'énergie de changement de phase (fusion ou cristallisation), comme l'augmentation de Tg, parait peu adaptée pour un suivi précis, par exemple de la réticulation en fonction du temps de lamination ou de la température de lamination, du fait de sa faible amplitude de variation. D'autre part, les thermogrammes obtenus permettent de constater que les variations les plus marquées en fonction du taux de réticulation, se produisent dans les courbes en rampe descendante de température, dans la zone CR de températures de cristallisation. De manière surprenante, la demanderesse a constaté que l'homme de l'art a peu l'habitude d'exploiter ces courbes de refroidissement de DSC pour l'EVA, les études se faisant essentiellement sur la base des thermogrammes en montée de température.

Sur les thermogrammes obtenus, le tracé correspondant au tout premier refroidissement de l'échantillon, jusqu'à la température limite inférieure, référencé r1 sur la figure 1A décrite ci-dessous en regard de l'exemple 1, ne permet pas d'en tirer des résultats exploitables et peut donc être éliminé du thermogramme. De même, la première montée en température, représentée sur le thermogramme de la figure 1A par le tracé référencé c1, comprend une zone de températures de fusion, comprise entre 0 et 80°C, se présentant sous la forme de pics peu répétables. En effet, dans cette zone, les pics liés à la première montée en température ne se superposent pas avec les pics du tracé lié à la deuxième ou à la troisième montée en température des cycles thermiques ultérieurs. En fait, les transitions thermiques présentes lors de la première rampe montante en température et peu répétables, sont essentiellement liées à l'histoire thermique de l'échantillon et changent dès la deuxième montée en température du deuxième cycle thermique. En effet, à partir du deuxième cycle thermique, les courbes correspondantes à la montée en température sont répétables et se superposent extrêmement bien. Par conséquent, préalablement à l'étape de comparaison du procédé de caractérisation, les tracés r1 et c1 correspondant respectivement au tout premier refroidissement jusqu'à la température limite inférieure et à la toute première montée en température du traitement thermique sont éliminés du thermogramme de l'échantillon. Ainsi, des mises en conditions préalables pour les échantillons, telles qu'un temps de conditionnement à des températures définies et parfois à des humidités contrôlées, peuvent être omises.

Comme dit précédemment, l'exploitation de la zone des températures de cristallisation est préférée car suffisante en elle-même pour mener à bien le procédé de caractérisation selon l'invention. La zone CR de températures de cristallisation se présente sous la forme d'un pic de cristallisation dont la température maximum ou de démarrage du pic, la température du maximum du signal (maximum du pic) et la forme, varient en fonction du taux de réticulation. Par conséquent, préalablement à l'étape de comparaison d'un thermogramme d'un échantillon inconnu avec des thermogrammes de référence, une étape supplémentaire de caractérisation du pic de cristallisation consiste à déterminer une température de signal maximum Tc du pic, une température de démarrage Td du pic, une température de changement de pente après le maximum du pic de cristallisation (Tt), ou, encore un facteur de forme FF du pic.

Les paramètres (Tt) et (FF) traduisent un changement très visible de la forme du pic de cristallisation, changement qui intervient après le maximum du pic (vers des températures plus basses). La température de croisement (Tt) entre deux droites tangentes au thermogramme et tracées sur le versant descendant du pic de cristallisation pourrait traduire ce changement de forme.

Un deuxième procédé pour traduire ce changement consiste en la détermination d'un facteur de forme (FF) du pic de cristallisation. Le calcul de FF consiste, dans un premier temps, à déterminer la température du maximum (Tc) du pic de cristallisation. Des limites de calcul en température [Tc ; (Tc -X°C)] encadrant le versant descendant du pic de cristallisation sont ensuite définies. Elles sont par exemple définies par la température du maximum (Tc) du pic de cristallisation et par une température limite basse (Tc-20°C) égale à ladite température du maximum (Tc) diminuée de 20°C. Une courbe représentant un rapport de température sur flux de chaleur (T/FC) en fonction de la température est ensuite tracée dans les limites de calcul définies. Puis, sur la courbe ainsi tracée, une valeur maximum [max (T/FC)] du rapport est déterminée et, enfin, une valeur de facteur de forme FF est calculée selon la formule suivante :

$$FF = \frac{max(T/FC)}{Tc / min\,(FC\,\grave{a}\,(Tc\text{-}X°C))} *100 \; ;$$

où min (FC à (Tc-X°C)) représente une valeur minimum du flux de chaleur à la température limite de calcul basse prédéfinie, par exemple, Tc-20°C.

Le paramètre X°C s'entend d'une variable en température (degré Celsius), comprise entre 10°C et 50°C, de préférence entre 15°C et 30°C.

L'un et/ou l'autre de ces paramètres (Tt) ou (FF) reflétant la forme du pic de cristallisation sont utilisés avantageusement pour comparer les formes des pics de cristallisation entre échantillons différents ou par rapport à des thermogrammes de référence.

L'invention porte en outre sur un procédé de contrôle de la qualité d'un copolymère d'EVA utilisé dans la fabrication d'un module photovoltaïque ou dans la fabrication de câbles. Ce procédé consiste à prélever un échantillon d'une masse comprise entre 2 et 15 mg, de préférence entre 6 et 12 mg, dudit copolymère et à soumettre ledit échantillon aux étapes du procédé de caractérisation décrit ci-dessus. Le faible besoin en matière pour le contrôle et le fait qu'il ne faille pas de forme particulièrement soignée pour l'échantillon prélevé, font que celui-ci peut facilement être récupéré à partir des rebuts de film des modules laminés de taille réelle. Le prélèvement sera alors considéré comme ayant subi le même traitement que le film d'EVA encapsulant du module. Alternativement, une ou plusieurs feuilles de film peuvent être laminées dans les mêmes conditions de profil thermique et profil de pression qu'un module réel, avec ou sans les autres composants (face avant ou Front sheet, cellules, face arrière ou Back sheet) d'un module dans ce qui serait un mini-module ou mini-laminât sacrificiel permettant de récupérer le film d'EVA pour en prélever un échantillon et le soumettre aux étapes du procédé de caractérisation/contrôle. Cette dernière façon d'opérer permet, également, par prélèvement à différents endroits du film d'EVA réticulé de déterminer l'homogénéité de la réticulation sur des tailles de film allant du mini-module aux tailles de film des modules de grande taille.

L'invention porte enfin sur un procédé de contrôle de la tenue dans le temps d'un copolymère d'EVA utilisé dans la fabrication d'un module photovoltaïque consistant à prélever dans un module photovoltaïque ayant vieilli, un échantillon d'une masse comprise entre 2 et 15 mg, de préférence entre 6 et 12 mg dudit copolymère et à soumettre ledit échantillon aux étapes du procédé de caractérisation décrit ci-dessus.

Le procédé de caractérisation permet ainsi de :

- s'affranchir des effets peu répétables liés à l'histoire thermique de l'échantillon (par élimination notamment du tracé c1),

- s'assurer que les mesures effectuées sont hautement répétables et reproductibles,

- tirer un maximum de sensibilité des mesures par rapport au niveau ou degré de réticulation de l'EVA,

- rendre l'exploitation des données, issues de l'appareil de DSC, automatique à travers un algorithme permettant de quantifier le degré de réticulation d'un échantillon donné.

Le procédé permet une caractérisation rapide, fiable et simple. Il utilise peu de matière et n'a pas besoin de se référer à d'autres méthodes. Il permet de caractériser des EVA réticulés par différents moyens, pas seulement au moyen de peroxydes organiques, mais aussi par irradiation par exemple. Il permet en outre de faire un contrôle post-fabrication ou des analyses de produits revenant du terrain, ce qui n'est pas possible avec le procédé de mesure par DSC basé sur la mesure des enthalpies de réticulation.

D'autres avantages et caractéristiques de l'invention apparaîtront à la lecture des exemples suivants donnés à titre d'exemple illustratif et non limitatif, en référence aux figures annexées qui représentent :

- Les figures 1A à 1C, respectivement un thermogramme obtenu pour un échantillon d'EVA lors du procédé de caractérisation selon l'invention, le même thermogramme sur lequel les tracés correspondant aux transitions thermiques non répétables ont été supprimés, et enfin deux thermogrammes respectivement d'un échantillon « frais » et du même échantillon après avoir subi une réticulation,

- La figure 2, des thermogrammes obtenus pour un échantillon d'EVA après différents temps de lamination,

- Les figures 3 et 4, la zone de températures de cristallisation agrandie respectivement de deux thermogrammes obtenus pour deux échantillons d'EVA réticulés après des temps de lamination différents,

- Les figures 5A à 5C, respectivement deux courbes représentant une zone agrandie de la zone de températures de cristallisation d'un thermogramme et une courbe représentant un rapport de température sur flux de chaleur en fonction de la température, ces trois courbes étant utilisées pour un calcul de facteur de forme du pic de cristallisation,

- La figure 6, différents thermogrammes obtenus pour des échantillons d'EVA de compositions différentes,

- La figure 7, une courbe représentant l'évolution de la température du pic de cristallisation en fonction d'un taux massique d'acétate de vinyle,

- La figure 8, une courbe de corrélation entre les résultats obtenus avec le procédé selon l'invention et ceux obtenus par la méthode de mesure des modules mécaniques par rhéologie,

- La figure 9, des courbes de tangente delta en fonction de la fréquence, à une température constante de 100°C obtenues pour un échantillon d'EVA après différents temps de lamination, par la méthode de mesure par rhéologie.

**Exemple 1 : Suivi de réticulation par traitement dans l'appareil de DSC**

Un premier échantillon d'EVA, contenant 33 % en poids d'acétate de vinyle, a été analysé selon le procédé de caractérisation selon l'invention. Cet échantillon a dans un premier temps été analysé « frais », c'est-à-dire sans réticulation préalable, lors de sa réception par un fabricant de films d'EVA pour modules photovoltaïques. Dans un deuxième temps, ce même échantillon a été analysé après une réticulation effectuée directement dans l'appareil de DSC, par traitement thermique à 150°C pendant 30 minutes.

Pour cela, 9,6 mg de l'échantillon d'EVA à 33 % d'acétate de vinyle sont mis en capsule sertie en aluminium et introduits dans la chambre de mesure d'un appareil de DSC. Le poids de la capsule contenant l'échantillon est déterminé par différence entre la capsule pleine sertie et la même capsule avec son couvercle, pesés avant d'introduire l'échantillon. Tous les poids sont notés. Une autre capsule sertie, vide d'échantillon, également en aluminium, est également introduite dans la chambre de mesure, en tant que cellule de référence. L'appareil de DSC utilisé est un appareil Q10 de la société TA INSTRUMENTS, équipé d'un système automatique de refroidissement à fluide thermique, modèle RCS 90, permettant de descendre jusqu'à environ -80°C. Pendant toute la durée de la mesure, l'appareil de DSC commande un débit automatique de balayage d'azote dans la chambre de mesure, afin d'éviter des réactions d'oxydation. Ce balayage d'azote est réalisé avec un débit de 50 ml par minute.

Pour effectuer la caractérisation, l'échantillon d'EVA à analyser est soumis au traitement thermique suivant : L'échantillon est refroidi jusqu'à -80°C à une vitesse de 10°C/minute. Après équilibrage de la température, l'échantillon est maintenu à cette température pendant 10 minutes. L'échantillon est ensuite réchauffé jusqu'à 120°C, à une vitesse de 10°C/minute. Ce cycle thermique est ensuite répété 2 fois. Enfin, l'échantillon est refroidi jusqu'à 25°C, à une vitesse de 10°C/minute. La figure 1A représente le thermogramme obtenu à l'issue de ce traitement thermique. Ce thermogramme représente plus particulièrement le flux massique de chaleur, en watts/gramme (W/g), en fonction de la température en °C.

Sur ce thermogramme, on distingue les trois zones de températures correspondant respectivement à une zone TV de températures de transition vitreuse, une zone FU de températures de fusion et une zone CR de températures de cristallisation. Ces zones sont entourées sur la figure 1 B.

La figure 1 B illustre le même thermogramme, après que les tracés r1 et c1 du thermogramme de la figure 1A, correspondant aux transitions thermiques non répétables, liées à l'histoire thermique de l'échantillon, aient été éliminés. Le thermogramme résultant comprend les courbes de 2 montées en température qui se superposent parfaitement, et de 3 descentes en température, dont la dernière s'arrête à la température ambiante, qui se superposent également parfaitement. Sur ce thermogramme, on relève lors du chauffage, la zone TV de températures correspondant à la zone de températures de transition vitreuse vers -40°C, ainsi que la zone FU de températures correspondant à la zone de températures de fusion dont le pic apparait vers 65°C. Lors du refroidissement, on repère la zone CR de températures correspondant à la zone de températures de cristallisation dont le pic se situe vers 40°C. La zone TV de transition vitreuse est à nouveau perceptible lors du refroidissement, mais elle est beaucoup moins bien définie que lors du chauffage.

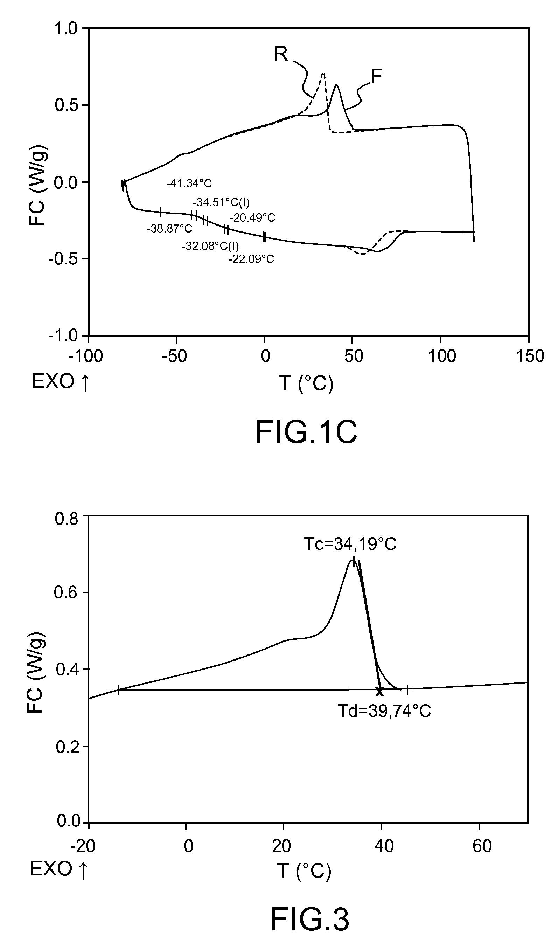

L'échantillon ainsi analysé est ensuite chauffé à une température de 150°C et maintenu à cette température pendant 30 minutes sous balayage d'azote. Ce traitement thermique à 150°C pendant 30 minutes a pour conséquence de provoquer la réticulation de l'échantillon d'EVA. Après cette réticulation, l'échantillon est soumis au même traitement thermique appliqué à l'EVA frais et décrit ci-dessus dans cet exemple, en vue de l'obtention d'un thermogramme. En comparant le thermogramme obtenu, référencé R sur la figure 1C, à celui de l'échantillon frais, référencé F sur la figure 1 C, on observe que l'effet du traitement thermique à 150°C pendant 30 minutes et provoquant la réticulation de l'échantillon est à peine perceptible dans la zone TV de températures de transition vitreuse. En effet, dans cette zone on constate une légère augmentation de la température Tg de transition vitreuse après réticulation. En revanche, cet effet est clairement visible dans la zone FU de températures de fusion puisqu'on note un décalage vers les basses températures du pic de fusion et une diminution notable du minimum du pic de fusion avec la réticulation. Cet effet est surtout visible dans la zone CR de températures de cristallisation, puisqu'on note une très nette diminution de la température du maximum Tc du pic avec la réticulation, mais également un changement net de la forme du pic. Finalement, la capsule contenant l'échantillon est pesée à nouveau après toutes les mesures et traitement. Sa masse n'a pas changé dans la limite de sensibilité d'une balance au dixième de milligramme.

**Exemple 2 : Détermination du taux ou niveau relatif de réticulation d'échantillons laminés dans des conditions industrielles**

Différents échantillons d'EVA, à 33 % d'acétate de vinyle, laminés à des temps différents, ont été analysés selon le procédé de caractérisation. Les échantillons sont laminés dans un laminateur industriel pour panneaux photovoltaïques. Les temps de lamination étant différents, les échantillons présentent tous des taux de réticulation différents.

Pour cela, des feuilles d'EVA, grade photovoltaïque à 33 % d'acétate de vinyle de la société ETIMEX, sont disposées dans un empilement comprenant une plaque de verre, une feuille de plastique anti-adhérent (Téflon®), la feuille d'EVA à réticuler, une nouvelle feuille de plastique anti-adhérent et 2 feuilles d'un EVA non conforme (dit « vieux »), servant de coussin d'amortissement. Cet empilement, au format mini-module (16x16cm), est ensuite placé dans un laminateur pour modules à deux chambres empilées, de la société 3S, modèle S1815E.

La lamination est effectuée de la manière suivante : la température du laminateur est montée à 145°C de température de consigne, puis l'empilement de couches est introduit dans la chambre inférieure du laminateur. Le laminateur est alors refermé et ses 2 chambres sont mises sous vide (c. 1 mbar). La température est maintenue à 145°C pendant 5 minutes, sans que le laminât soit en contact direct avec la plaque chauffante du laminateur. C'est ce que l'on appelle la phase 1, dite de dégazage, pendant laquelle l'EVA s'approche de sa température de fusion et la température du laminât s'homogénéise, aux environs de 70°C. La chambre supérieure est ensuite remise à pression atmosphérique, et le laminât est mis directement en contact avec la plaque chauffante et maintenu dans cette configuration pendant le temps de lamination choisi. C'est ce que l'on appelle la phase 2 dite de lamination, proprement dite, pendant laquelle la température du laminât monte rapidement vers la consigne de 145°C plus ou moins 3 degrés et une pression de c. 1 bar est appliquée par la nappe séparant la chambre supérieure de la chambre inférieure (pour rappel : la chambre inférieure est sous vide et la chambre supérieure est à pression atmosphérique pendant cette phase). A la fin de cette deuxième phase, les pressions des deux chambres sont équilibrées et le laminât est prêt à sortir du laminateur. Enfin, le laminât est sorti à chaud du laminateur puis refroidi à température ambiante. Il est ensuite désassemblé et la feuille d'EVA ainsi réticulée est récupérée pour être utilisée dans le procédé de caractérisation selon l'invention.

Des temps de lamination (phase 2 de lamination proprement dite) de 3, 7, 10, 12 et 15 minutes sont retenus pour la réticulation d'autant de feuilles d'EVA selon le protocole ci-dessus.

Des échantillons d'entre 8 et 12 mg des feuilles d'EVA ainsi réticulées sont préparés pour la mesure par DSC, selon le procédé de l'exemple 1.

Un traitement thermique analogue à celui de l'exemple 1 est appliqué sur chacun des échantillons afin d'obtenir des thermogrammes pour chacun d'eux. Ce traitement thermique consiste à :

1) Descendre le plus rapidement possible à -70°C,
2) Equilibrer la température à -70°C,
3) Maintenir à -70°C pendant 5 minutes,
4) Monter jusqu'à 100°C à une vitesse de 10°C/min,
5) Descendre à -70°C à une vitesse de 10°C/min,
6) Répéter les étapes 2 à 5, 2 fois,
7) Revenir à 25°C à une vitesse de 10°C/min.

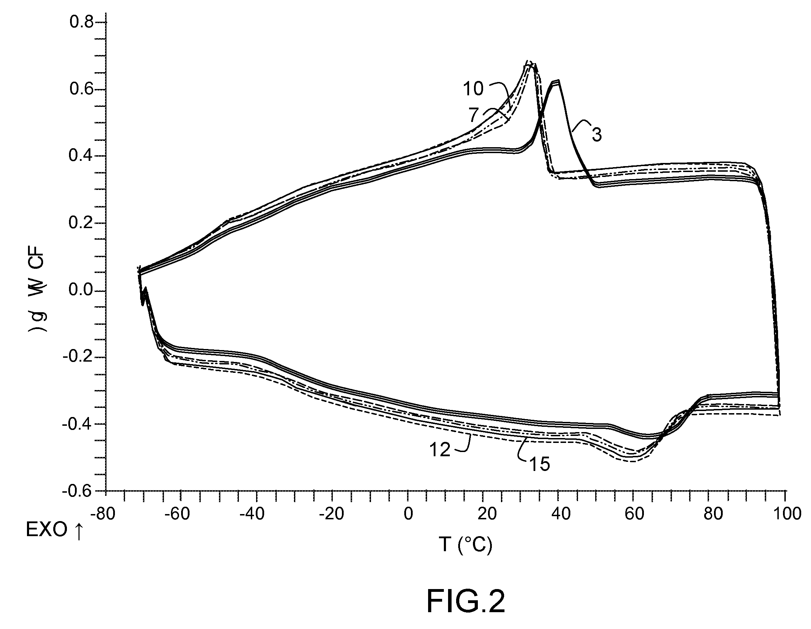

La figure 2 montre l'ensemble des courbes de DSC pour les 5 échantillons à différents temps de lamination, après suppression des enregistrements correspondant à la première descente rapide à -70°C, la dernière montée à 25°C et la première montée à 120°C du premier cycle thermique (suppression des pics non répétables liés à l'histoire thermique de l'échantillon comme expliqué ci-dessus). Sur cette figure, les courbes sont référencées 3, 7, 10, 12, et 15, références qui correspondent respectivement aux temps de lamination des échantillons correspondants.

Ces tracés de DSC correspondent, pour chaque échantillon, à 2 passages en montée et à 3 passages en descente. On peut constater, comme pour l'exemple 1, que les courbes sont très répétables, car parfaitement superposées. L'échantillon le moins réticulé, correspondant au temps de lamination de 3 min (courbe référencée 3), présente encore une répétitivité légèrement moins bonne. En effet, les 3 passages en descente sont discernables (les pics de cristallisation sont légèrement décalés). Ce léger défaut de répétitivité disparaît dès qu'on avance en temps de réticulation, et la différence entre les temps de réticulation est plus grande que l'écart de répétitivité constaté uniquement pour le premier temps de 3 min. L'observation de ces courbes montre, les traits distinctifs de l'exemple 1, c'est-à-dire qu'il y a peu de résolution dans la zone de températures de transition vitreuse, une diminution de la température Tf du minimum du pic de fusion, une diminution de la température Tc du maximum du pic de cristallisation et un changement net de forme de ce pic de cristallisation.

Les thermogrammes ainsi obtenus pour des échantillons présentant différents taux de réticulation peuvent ensuite servir de thermogrammes de référence lors de la caractérisation d'un échantillon d'EVA, afin de connaitre son taux de réticulation. La comparaison des thermogrammes de ces échantillons entre eux, permet, également de classer les échantillons du moins réticulé au plus réticulé ; le traitement des courbes avec les paramètres cités ci-dessus comme Tc, Td, Tt, FF, permet d'assigner une valeur numérique à chaque échantillon, valeur qui traduit son niveau de réticulation relatif aux autres échantillons. Dans cet exemple, le taux d'acétate de vinyle des échantillons analysés est constant et égal à 33 % en poids et la masse moléculaire est également identique pour tous les échantillons, puisqu'ils sont issus de la même feuille d'EVA.

Le Tableau I montre les valeurs de température de transition vitreuse Tg obtenues à partir des tracés DSC, en fonction du temps de lamination $t_{lam}$.

Tableau I

| $t_{lam}$ (min) | Tg (°C) |
|---|---|
| 3 | -40,4 |
| 7 | -39,3 |
| 10 | -39,3 |
| 12 | -39,0 |
| 15 | -37,9 |

Les valeurs de température Tg de transition vitreuse obtenues correspondent au premier point d'inflexion, Tgi, (déterminé par la méthode bien connue de croisement de 2 tangentes au signal) de la zone TV de températures de transition vitreuse. Les valeurs de température Tg de transition vitreuse du tableau I sont obtenus à l'aide du programme d'ordinateur de traitement de données de l'appareil TA INSTRUMENTS, programme d'ordinateur appelé « Universal Analysis » ou « WinUA ». Pour ce faire, il est nécessaire de donner au programme d'ordinateur deux températures limites basse et haute, encadrant la totalité de la zone de transition vitreuse, TV. Lorsque les températures limites haute et basse de la zone TV de températures varient, par exemple lorsque la limite basse est fixée à -55°C mais que la limité haute est prise à -20°C, puis -10°C, puis 0°C, puis 10°C, puis 20°C, alors le programme d'ordinateur de calcul peut donner des valeurs de température Tg de transition vitreuse légèrement différentes ; dans cet exemple, une moyenne de ces différentes valeurs (5 paires de températures limites) a été calculée. La procédure est facilement programmable dans un but de la rendre automatique. A partir des valeurs de la température Tg de transition vitreuse ainsi obtenues, si on trace une courbe de cette température Tg en fonction du temps de lamination, une tendance montante peut être mise en évidence avec un coefficient de corrélation supérieur à 0,97 pour une droite. Cependant, les valeurs, même entre les temps de lamination extrêmes (c'est-à-dire entre 3 et 15 minutes) sont assez proches puisque comprises dans un intervalle de température d'à peine 2,5°C. La zone de transition vitreuse TV permet, donc, de différencier de manière significative un échantillon bien réticulé (15 minutes de lamination) d'un autre très peu réticulé (3 minutes), mais le suivi précis et fiable comme méthode de contrôle de fabrication, en fonction du temps de lamination est plus délicat.

Le Tableau II montre les valeurs des températures Tf des minima des pics de fusion en fonction du temps de lamination $t_{lam}$.

Tableau II

| $t_{lam}$ (min) | Tf (°C) |
|---|---|
| 3 | 65,8 |
| 7 | 62,4 |
| 10 | 61,5 |
| 12 | 60,8 |
| 15 | 60,6 |

Ces valeurs peuvent par exemple être obtenues à l'aide d'un programme d'ordinateur de traitement de données de l'appareil, par exemple le programme d'ordinateur « Universal Analysis » (WinUA), avec des limites définies d'intégration haute et basse encadrant le pic de fusion, comprises par exemple entre 10 à 90°C. Il peut être constaté que l'écart total de température entre les deux extrêmes (temps de lamination de 3 et 15 minutes) est de pratiquement le double que pour l'écart total de la température Tg de transition vitreuse. Ces valeurs différentes de températures minimales des pics de fusion traduisent des différences significatives de niveau de réticulation des échantillons et permettent de les classer en fonction de l'avancement de la réaction de réticulation. Si, en plus, la densité de noeuds de réticulation de ces échantillons est déterminée par une méthode directe, ces températures pourront être traduites directement en taux de réticulation.

Le Tableau III montre les valeurs des températures du maximum Tc des pics de cristallisation, ainsi que des températures de démarrage Td dudit pic. La température de démarrage Td est obtenue en traçant deux droites tangentes au tracé DSC en refroidissement, c'est-à-dire, une tangente à la ligne de base, avant le début du pic et une tangente au versant montant du pic associé au début de la cristallisation. Le croisement des deux tangentes permet d'obtenir une valeur de Td. Cette détermination de la température de démarrage est illustrée sur la figure 3. Ces températures Tc et Td sont calculées par exemple à l'aide du programme d'ordinateur « Universal Analysis » évoqué ci-dessus. Des limites d'intégration haute et basse encadrant le pic de cristallisation sont également définies et indiquées dans le Tableau III.

Tableau III

| $t_{lam}$ (min) | Limites d'intégration (°C) | | Tc (°C) | Td (°C) |
|---|---|---|---|---|
| 3 | -14,0 | 55 | 39,1 | 46,8 |
| 7 | -14,7 | 45 | 33,6 | 38,4 |
| 10 | -13,9 | 45 | 32,9 | 37,3 |
| 12 | -13,9 | 45 | 32,6 | 37,0 |
| 15 | -13,5 | 45 | 32,2 | 36,7 |

Sur ce tableau, on constate que les températures Tc de sommet de pic et de démarrage Td suivent une tendance claire en fonction du temps de lamination avec un écart entre les temps extrêmes encore plus marqué que pour la température de minimum des pics de fusion Tf.

Pour associer une valeur à la forme du pic de cristallisation deux procédés ont été mis au point et appliqués.

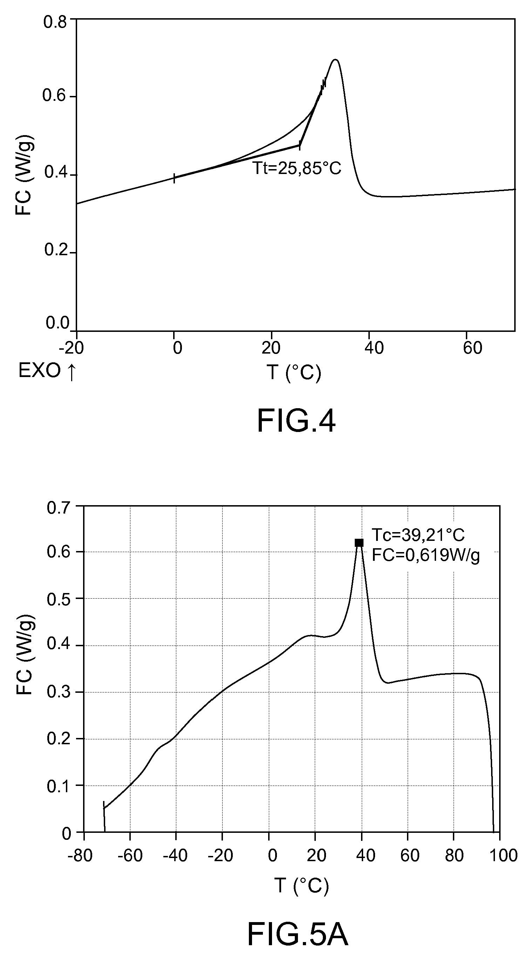

Le premier consiste à déterminer un point de croisement Tt de deux droites tangentes au thermogramme et tracées sur le versant descendant du pic de cristallisation, comme illustré sur la figure 4. Cette détermination de la température de croisement Tt des 2 tangentes peut être faite à l'aide du même programme d'ordinateur que précédemment, par exemple le programme d'ordinateur « Universal Analysis ». Le Tableau IV ci-dessous montre la variation de cette température de croisement Tt en fonction du temps de lamination. Cette température de croisement Tt, comme les températures Tc du maximum du pic de cristallisation et de démarrage Td de la cristallisation suivent une tendance claire en fonction du temps de lamination. Les résultats permettent d'affirmer que les changements de réticulation les plus prononcés se produisent entre 3 et 7 minutes de lamination. Clairement, un échantillon à 3 minutes de lamination est très peu réticulé : la forme du pic de cristallisation est très semblable à celle d'un échantillon « frais », et les pics de cristallisation des 3 cycles thermiques en descente ne se superposent pas parfaitement. La réticulation continue à avancer, mais à un degré moindre à partir de 7 minutes de temps de lamination, et surtout à partir de 10 minutes de temps de lamination.

Tableau IV

| $t_{lam}$ (min) | Tt (°C) |
|---|---|
| 3 | 32,7 |
| 7 | 27,5 |
| 10 | 25,7 |
| 12 | 24,6 |
| 15 | 23,6 |

Le deuxième procédé permettant d'attribuer une valeur numérique à la forme du pic de cristallisation est la méthode faisant appel à la détermination d'un facteur de forme FF. Cette méthode, non comprise dans le programme d'ordinateur de traitement « Universal Analysis » a été mise au point pour mieux tenir compte de l'ensemble de la forme du pic de cristallisation depuis la température du maximum du pic, jusqu'à des températures où toutes les courbes récupèrent la même forme d'une droite descendante.

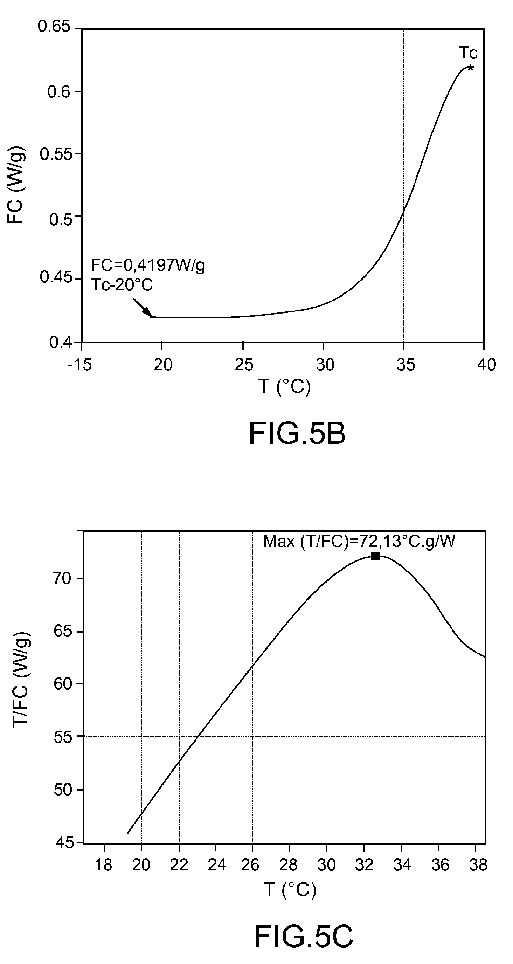

Prenons pour exemple le cas de l'échantillon 3, après 3 minutes de lamination ; le traitement des données du pic de cristallisation et les étapes qu'implique le calcul du facteur de forme sont les suivantes : On détermine tout d'abord la valeur de la température de cristallisation Tc correspondant au maximum du pic de cristallisation. La détermination de cette valeur de Tc est illustrée sur la figure 5A qui représente une zone agrandie du pic de cristallisation. Tc = 39,21 °C dans l'exemple (voir figure 5A). On récupère ensuite la partie de courbe comprise entre les limites de calcul haute, Tc, et basse, T = Tc - 20°C, encadrant la partie descendante du pic de cristallisation. Cette partie de courbe est représentée en agrandi sur la figure 5B. Dans les limites de calcul déterminées, on trace une courbe représentant le rapport de température sur flux de chaleur (T/FC) en fonction de la température. Cette courbe est illustrée sur la figure 5C. Sur la courbe ainsi tracée, on détermine une valeur maximum [max(T/FC)] du rapport. Cette valeur est égale à 72,13°C.g/W dans l'exemple et telle que lisible sur la courbe de la figure 5C. Enfin, on calcule une valeur de facteur de forme FF selon la formule suivante :

$$FF = \frac{max(T/FC)}{Tc \: / \: min \: (FC \: \text{à} \: (Tc-20°C))} * 100 \: ;$$

où min (FC à (Tc-20°C)) représente une valeur minimum du flux de chaleur à la température limite (Tc-20°C) de calcul basse. Cette valeur est égale à 0,4197 W/g dans l'exemple et telle que lisible sur la figure 5B.

Dans cet exemple, le facteur de forme FF du pic de cristallisation de l'échantillon réticulé avec un temps de lamination de 3 minutes est donc égal à :

$$FF = (72,13 \: /(39,21/0,4197))*100 = 77,20 \: \%$$

- De manière avantageuse, la méthode de détermination du facteur de forme a été automatisée par la programmation d'un exécutable. Ce programme d'ordinateur est exécuté par un processeur qui peut par exemple être inséré dans un module de supervision de l'appareil de mesure par DSC. Il permet notamment de traiter un fichier de DSC, de réaliser l'ensemble des graphiques, de déterminer les températures Tg de transition vitreuse, Tf de fusion, Tc de cristallisation, Td de démarrage de la cristallisation, Tt de croisement des droites tangentes sur le versant descendant du pic de cristallisation et de calculer le facteur de forme FF. Comme pour les valeurs des températures Tf, les températures Tc, Td, Tt et le facteur de forme FF traduisent des différences significatives de niveau de réticulation des échantillons et permettent de les classer en fonction de l'avancement de la réaction de réticulation. Si, en plus, la densité de noeuds de réticulation de ces échantillons est déterminée par une méthode directe, ces températures pourront être traduites directement en taux de réticulation.

**Exemple 3. Détermination du taux d'acétate de vinyle d'un échantillon** d'EVA.

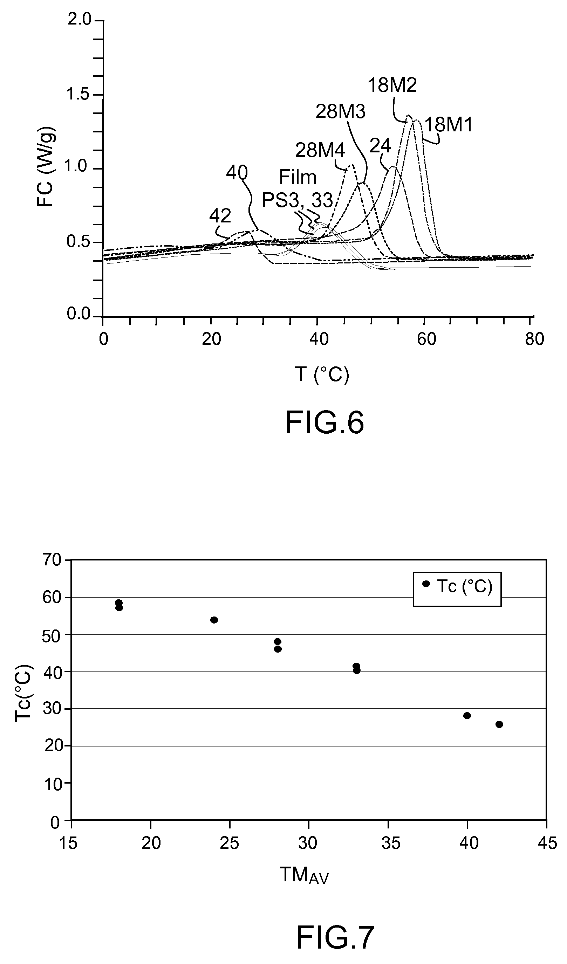

Selon un autre aspect de l'invention, la méthode de DSC de l'invention peut également être appliquée à la détermination du taux d'acétate de vinyle d'un échantillon d'EVA. La Figure 6 montre un grossissement de la zone CR du pic de cristallisation pour des échantillons d'EVA comportant différents taux d'acétate de vinyle et de différentes fluidités, c'est-à-dire avec des masses moléculaires différentes.

Sur cette figure, les courbes sont référencées par des numéros 18, 24, 28, 33, 40, 42, correspondant aux taux massiques d'acétate de vinyle dans les échantillons d'EVA analysés. Deux courbes 18 et deux courbes 28 sont en outre différenciées par les caractères M1, M2, M3, M4 car elles correspondent à des échantillons ayant un taux d'acétate de vinyle identique de respectivement 18 % et 28 %, mais ayant une fluidité et une masse moléculaire différente, respectivement M1, M2 et M3, M4.

Il apparaît clairement que la température Tc du maximum du pic de cristallisation diminue en fonction du taux d'acétate de vinyle. Il est donc possible de déterminer la teneur en acétate de vinyle d'un échantillon d'EVA inconnu par comparaison avec les thermogrammes de référence correspondant à des échantillons de teneur connue. Ainsi, l'insertion des courbes de DSC de l'échantillon non réticulé de l'exemple 1 d'EVA à 33 % d'acétate de vinyle, courbes référencées 33, se fait clairement dans l'intervalle entre un EVA à 28 % et un EVA à 40 % d'acétate de vinyle, comme le montre la Figure 6.

Par ailleurs, la Figure 7 montre l'évolution de la température Tc du maximum du pic de cristallisation en fonction du taux massique $TM_{AV}$ d'acétate de vinyle. Il apparaît clairement que l'incertitude liée au fait que les échantillons non réticulés ne se superposent pas parfaitement, est plus faible que les différences de température Tc du maximum du pic attribuables au taux d'acétate de vinyle. De plus, la courbe montre une portion bien linéaire entre 24 et 42 % massique d'acétate de vinyle, ce qui permet d'obtenir par la méthode DSC le taux d'acétate de vinyle d'un échantillon inconnu avec une très bonne précision. Ainsi, à partir des températures de cristallisation la corrélation prévoit, un taux massique compris entre 31,1 et 31,9 % pour l'échantillon de l'exemple 1, dont le taux nominal théorique est de 33 %

La DSC permet donc de déterminer avec une bonne précision le taux d'acétate de vinyle d'un EVA quelle que soit sa fluidité et inversement. Elle permet en outre de remonter à la fluidité et donc de déterminer la masse moléculaire.

**Exemple 4. Comparaison de la méthode DSC de l'invention avec une méthode connue de suivi de réticulation consistant à mesurer des modules mécaniques par rhéologie**

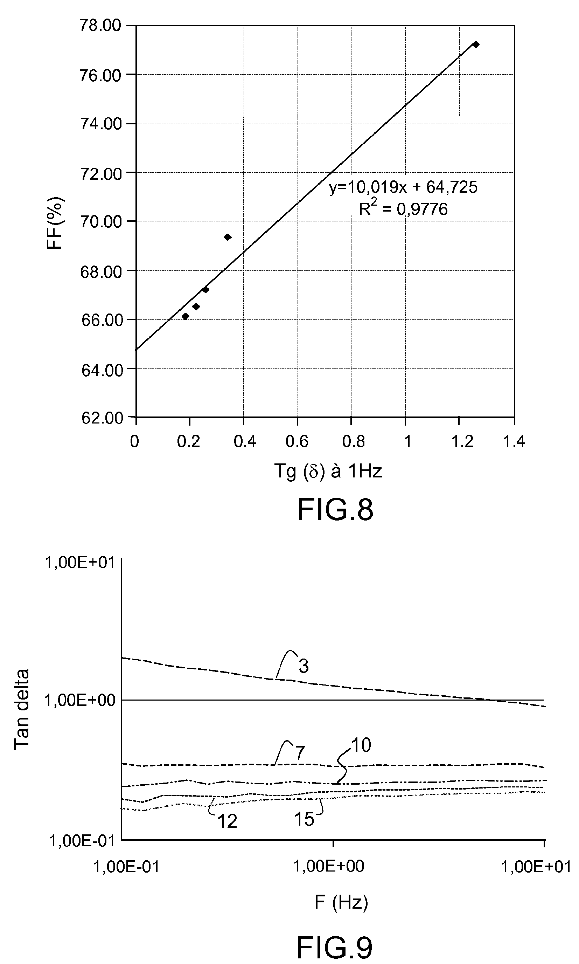

Des échantillons des feuilles laminées d'EVA de l'exemple 2 ont été préparés et soumis à des mesures dynamiques de module de cisaillement en fonction de la fréquence d'oscillation, à une température constante de 100°C, dans un appareil Anton Paar Physica MCR 301, en mode plan/plan, avec les références de mobile suivantes: MCR 301 SN80102900 ; FW3.22 ; Slot9 ; Adj20d. Des échantillons circulaires ont été découpés dans les feuilles d'EVA laminées comme décrit dans l'exemple 2, à l'aide d'un emporte-pièce aux dimensions du mobile utilisé. La déformation a été gardée constante à 0,1%, ce qui reste dans la zone de viscoélasticité linéaire. La figure 9 montre des courbes, référencées 3, 7, 10, 12 et 15, de tangente delta = G"/G' en fonction de la fréquence d'oscillation à 100°C pour les échantillons réticulés après des temps de lamination respectivement de 3, 7, 10, 12 et 15 minutes. Ces mesures montrent clairement que l'échantillon à 3 minutes de temps de lamination n'est pas assez réticulé, puisque son comportement viscoélastique en fonction de la fréquence est celui d'un liquide viscoélastique à basse fréquence comme expliqué ci-dessous. En revanche, pour les échantillons à partir de 7 minutes de temps de lamination, un tel comportement de liquide viscoélastique n'a pu être mis en évidence dans la plage de fréquences explorée. Dans cet exemple, il a pu être mis en évidence, une difficulté à analyser les échantillons à partir de 10 minutes de lamination qui, du fait de leur réticulation, deviennent suffisamment solides pour le rhéomètre dans les conditions utilisées, ce qui provoque des problèmes de glissement se traduisant par des courbes très bruitées à basses fréquences. De ce fait, l'analyse se limite à une zone de fréquence n'allant pas plus bas que 0,1 Hz et aux courbes de tangente delta, définies comme le rapport des modules dynamiques G" (partie imaginaire ou visqueuse du module complexe de cisaillement) et G' (partie réelle ou élastique).

On voit clairement sur la figure 9 que l'échantillon à 3 minutes de temps de lamination (courbe 3) croise la valeur de tangente delta = 1 et que tangente delta continue à augmenter à basses fréquences. Ce comportement est typique d'un matériau liquide viscoélastique puisqu'à partir de tangente delta = 1 et pour des valeurs supérieures à 1, le module visqueux, G", est plus grand que le module élastique G'. Par contre, pour les autres temps de lamination (7, 10, 12 et 15 minutes), les courbes correspondantes 7, 10, 12, et 15 de tangent delta, qui traduisent la proportion de comportement liquide (visqueux) par rapport au comportement solide (élastique) sont nettement plus basses et pratiquement sans pente. Cela laisse supposer que même à très basses fréquences (non accessible dans ces mesures) la courbe de tangente delta n'arrivera pas à la valeur de 1 et encore moins à la dépasser. On voit en plus que l'écart le plus grand se présente entre 3 et 7 minutes de temps de lamination et qu'à partir de 7 minutes les différences s'estompent, car les échantillons sont suffisamment rendus solides élastiques par la réticulation. C'est exactement le même type de comportement qui est mis en évidence par la technique de DSC, selon le procédé de caractérisation mis en oeuvre dans les exemples 1 à 3. La figure 8 montre l'évolution du facteur de forme FF du pic de cristallisation obtenu par la méthode DSC de l'invention, en fonction de la valeur de tangente delta obtenue, à 1 Hz, par la méthode de mesure par rhéologie. On constate sur cette figure que le coefficient de corrélation est très bon et voisin de 0,98. Ce bon accord traduit une même tendance entre les données obtenues par le traitement DSC décrit ci-dessus et des essais rhéologiques.

Le procédé selon l'invention permet donc de déterminer la valeur d'au moins une caractéristique, à savoir le taux ou le niveau de réticulation d'un échantillon d'EVA de manière simple, fiable, rapide et précise. Les résultats obtenus sont comparables à ceux obtenus par des méthodes classiques et beaucoup plus compliquées à mettre en oeuvre.

Le procédé permet en outre de déterminer la valeur d'une deuxième et d'une troisième caractéristique, à savoir, respectivement le taux d'acétate de vinyle et la masse moléculaire de l'échantillon d'EVA.

**Exemple 5. Utilisation de la méthode pour le contrôle qualité de modules photovoltaïques juste après fabrication**

Dans cet exemple, l'appareil de DSC des exemples précédents est utilisé. Des échantillons d'encapsulant EVA sont prélevés sur de vrais modules photovoltaïques constitués d'un laminât de couches, à savoir : une face avant transparente en verre ou en polymère transparent, une ou plusieurs couches d'encapsulant avant, un squelette de cellules photovoltaïques soudées entre elles avec des connecteurs conducteurs d'électricité, une ou plusieurs couches d'encapsulant face arrière et une face arrière en polymère, en verre ou en composite polymère/fibres de verre. Dans tous les cas, il s'agit d'un EVA grade photovoltaïque à 33% en poids d'acétate de vinyle, décrit dans l'exemple 2. Les laminations ont été faites dans le laminateur de l'exemple 2. Les programmes de lamination utilisés ont été variables selon la configuration du module (taille, types de couches en face avant et face arrière), mais dans tous les cas, des conditions de réticulation convenable ont été recherchées avec des consignes en température d'au moins 145°C et des temps de lamination proprement dite, après l'étape de dégazage, d'au moins 10 minutes, sauf indication contraire (lamination raccourcie). Dans cet exemple, seule la zone de cristallisation (CR) est exploitée, et ce à partir des thermogrammes de DSC qui peuvent être obtenus en suivant les étapes de chauffe/refroidissement des exemples précédents, ou, de manière optimisée, en utilisant le programme réduit suivant :

1) Equilibrage de la température à température ambiante (c. 20°C)

2) Chauffage rapide sans contrôle de rampe de chauffe, à 100°C.

3) Refroidissement de 100°C à -20°C à vitesse contrôlée de 10°C/min

4) Retour à température ambiante et fin de processus.

On notera qu'ici, lorsque seule la zone de cristallisation est utilisée dans le procédé selon l'invention, la température limite inférieure est de -20° de sorte que le traitement thermique est compris entre -20°C et 100°C.

Ce programme de chauffe/refroidissement permettant d'obtenir le pic de cristallisation au refroidissement, peut être réalisé en moins de 30 minutes par échantillon.

A chaque fois, un flux de gaz inerte de 50 ml/min est utilisé pendant le processus ; les échantillons dans des capsules serties, comme indiqué dans les exemples précédents, ont été pesés au préalable pour se trouver dans la zone de masses de 4 à 10 mg. Après la mesure, le poids de la capsule est contrôlé pour vérifier qu'il n'y ait pas eu de pertes de masses significatives. Les données obtenues, à savoir des points (T,Q) pour (température, flux de chaleur) correspondant à une étape de refroidissement, peuvent être analysées par le programme d'ordinateur « Universal Analysis » de l'appareil pour l'obtention de la température au pic de cristallisation, Tc, et de la température de démarrage de la cristallisation, Td (aussi appelée Tonset). Le facteur de forme, FF (aussi appelé SF pour « shape factor »), dont le mode d'obtention par calcul est défini dans les exemples précédents, peut être calculé à partir des données numériques correspondant aux paires de valeurs (T,Q). Alternativement, un programme d'ordinateur permettant de calculer les trois paramètres à partir des données expérimentales (T,Q), peut être utilisé. Un tel programme d'ordinateur a été élaboré par la demanderesse en utilisant l'application LABVIEW®.

De nombreuses expériences et la corrélation avec d'autres méthodes de détermination du niveau de réticulation des encapsulants EVA, comme discuté dans l'exemple 4, ont permis d'établir que, pour le contrôle qualité de la réticulation, un critère de valeur minimale à atteindre pour chacun des trois paramètres Tc, Td et facteur de forme (Tc, Tonset, FF ou SF), permettait d'évaluer de manière optimale la qualité de la réticulation de l'EVA. Ainsi, pour un EVA à 33% d'acétate de vinyle décrit dans les exemples précédents, lorsque Tc, Td (ou Tonset) et FF (ou SF) sont respectivement inférieures ou égaux à 33°C, 37°C et 67%, cela correspond à des encapsulants EVA bien réticulés (en termes de taux de gels, par exemple, cela correspond à des EVA avec un taux de gel supérieur à 75%, mesuré par extraction au xylène selon la norme ASTM D-2765-95. Ces valeurs minimales peuvent être ajustées pour chaque type d'EVA utilisé (fournisseur, grade, éventuellement un lot), sans que l'on s'attende à des valeurs très différentes, tant que l'EVA utilisé reste un EVA grade photovoltaïque à 33% en poids d'acétate de vinyle. En plus du cas où tous les trois paramètres auraient des valeurs inférieures ou égales à leurs valeurs minimales respectives, deux autres cas peuvent se présenter :

a) lorsque les valeurs des trois paramètres sont respectivement supérieures aux valeurs minimales, dans cet exemple 33°C, 37°C, 67%, auquel cas la réticulation sera considéré comme inacceptable dans une logique de contrôle de qualité

b) lorsqu'un paramètre sur trois ou deux paramètres sur trois n'atteignent pas les valeurs minimales : dans ce cas, s'il s'agit d'un paramètre sur trois, la réticulation pourra être considérée comme passable mais à surveiller et s'il s'agit de deux paramètres sur trois, elle pourra être considérée comme inacceptable à des fins de contrôle de qualité comme lorsque les trois paramètres n'atteignent pas leurs valeurs minimales.

Le tableau V ci-dessous présente l'ensemble des résultats de mesure des trois paramètres Tc, Td (ou Tonset) et FF (ou SF), pour tous les échantillons d'EVA provenant de vrais modules. Un code (« oui » ou « non ») indique le fait que le paramètre considéré soit inférieure ou égal (oui) à sa valeur minimale empirique, ou supérieure à cette valeur (non). Conformément aux règles définies dans le paragraphe précédent, la dernière colonne indique le verdict contrôle de qualité final (Verdict CQ) par un «Passe », « Ne passe pas » ou « Passe. A surveiller ».

Tableau V : Utilisation du procédé de l'invention pour le contrôle de qualité de modules photovoltaïques

| Description de l'échantillon | Tc (°C) | Td ou Tonset (°C) | FF ou SF (%) | Param. 1 | Param. 2 | Param. 3 | Verdict CQ |
|---|---|---|---|---|---|---|---|
| EVA non réticulé, avant lamination | 41,9 | 49,9 | 90,8 | NON | NON | NON | Ne passe pas |
| EVA témoin bien réticulé issu d'un module* | 32,56 | 36,81 | 63,92 | OUI | OUI | OUI | Passe |
| EVA "suspect". Doutes sur la qualité de la réticulation" | 37,98 | 42,46 | 77,13 | NON | NON | NON | Ne passe pas |

(suite)

| Description de l'échantillon | Tc (°C) | Td ou Tonset (°C) | FF ou SF (%) | Param. 1 | Param. 2 | Param. 3 | Verdict CQ |
|---|---|---|---|---|---|---|---|
| EVA"mou" issu d'un module avec doutes sur la qualité de la réticulation | 34,13 | 38,53 | 71,17 | NON | NON | NON | Ne passe pas |
| EVA "temps de stockage > 3 mois". Lamination standard 145°C/10 min* | 32,97 | 37,03 | 64,7 | OUI | NON | OUI | Passe. A surveiller |
| EVA "temps de stockage > 3 mois". Lamination raccourcie 145°C/<10 min* | 33,03 | 36,97 | 67,3 | NON | OUI | NON | Ne passe pas |
| EVA "temps de stockage > 3 mois". Lamination consigne à 150°C/10 min* | 31,29 | 36,07 | 66,11 | OUI | OUI | OUI | Passe |
| EVA module sans verre, face arrière composite, cycle allongé** | 32,11 | 36,46 | 65,71 | OUI | OUI | OUI | Passe |
| EVA "temps de stockage > 6 mois". Couche supplémentaire d'EVA. Lamination staridard** | 31,42 | 36,09 | 67,52 | OUI | OUI | NON | Passe. A surveiller |

*Structure classique verre/EVA/cellules/EVA/Polymère fluoré. **Structure sans verre (polymère fluoré transparent en face avant) et avec une face arrière en composite polymère/fibres de verre.

Comme attendu, l'EVA sans aucune réticulation, ne passe aucun critère, alors qu'un EVA convenablement réticulé les passe tous. L'EVA qualifié de « suspect » ne passe aucun critère, tout comme l'EVA qualifié de « mou », même si les valeurs des paramètres, pour ce dernier, se rapprochent plus des valeurs limites. En cela, la méthode est sensible à des degrés différents dans les échantillons rejetés ou acceptés. L'EVA en lamination standard avec trois mois de stockage, passe deux critères sur trois et le troisième est pratiquement sur la valeur minimale, on peut considérer que la réticulation est passable, mais de peu. L'EVA en lamination raccourcie avec trois mois de stockage, passe un seul critère et est rejetée, même si l'on peut constater qu'on se rapproche beaucoup des valeurs minimales. Ici, l'expérience du fabricant peut conduire à modifier les règles d'acceptation/rejet, de manière à tenir compte des cas limites comme celui-ci ; compte-tenu des règles définies pour cet exemple, le verdict CQ pour cet échantillon est négatif. Avec une augmentation de 5°C (mesure corrective) de la consigne de lamination en cycle standard, on constate que l'EVA passe, à nouveau les trois critères. Pour les deux derniers échantillons, la différence principale est le temps de stockage de l'EVA qui est passé au double. Cela se traduit par une réticulation un peu moins bonne : l'échantillon à trois mois de stockage passe tous les critères, celui à six mois passe deux critères sur trois et est accepté, mais sous réserves. Ces réserves permettent de déclencher des actions correctives comme l'augmentation de la température de lamination.

## Revendications

1. Procédé de caractérisation d'un copolymère d'éthylène et d'acétate de vinyle (EVA) utilisant une technique d'analyse par calorimétrie différentielle, **caractérisé en ce que** ledit procédé comporte les étapes consistant à :

   - soumettre un échantillon dudit copolymère d'EVA à un traitement thermique, par montées et descentes de température à vitesse constante, compris entre une température limite inférieure de -80°C et une température limite supérieure de 120°C, de préférence entre -70°C et 100°C, pour l'obtention d'un thermogramme,
   - sur le thermogramme obtenu, relever une zone de températures correspondant à une zone (CR) de températures de cristallisation,
   - caractériser la zone (CR) de température de cristallisation, présentée sous la forme d'un pic de cristallisation, ledit pic étant déterminé par une température du maximum (Tc) dudit pic, une température de démarrage (Td) dudit pic, une température de croisement (Tt) de deux droites tangentes au versant descendant dudit pic et un facteur de forme (FF) dudit pic,
   - comparer ladite zone (CR) de températures de cristallisation à une zone correspondante de températures de cristallisation sur des thermogrammes de référence, ou à une zone de températures correspondante de températures de cristallisation sur des thermogrammes d'autres échantillons,

- en fonction du résultat de la comparaison, déterminer plusieurs valeurs de caractéristiques dudit échantillon de copolymère d'EVA, dont une est un niveau de réticulation dudit échantillon et une est un taux d'acétate de vinyle dudit échantillon.

2. Procédé selon la revendication 1, **caractérisé en ce que**, sur le thermogramme obtenu, une zone (TV) de température de transition vitreuse et une zone (FU) de températures de fusion sont relevées pour être comparées respectivement à une zone correspondante de températures de transition vitreuse ou de température de fusion sur des thermogramme de référence ou sur des thermogrammes d'autres échantillons ; ces zones (TV) et (FU) faisant, à l'instar de la zone (CR), l'objet d'une étape de caractérisation.

3. Procédé selon la revendication 1, **caractérisé en ce que** la température limite inférieure est de -20° de sorte que le traitement thermique est compris entre -20°C et 100°C.

4. Procédé selon la revendication 1, **caractérisé en ce que** parmi les valeurs de caractéristiques dudit échantillon de copolymère d'EVA, déterminées à l'issue de l'étape de comparaison, il y a aussi l'une au moins, des valeurs de caractéristique suivantes : un taux d'acétate de vinyle présent dans ledit échantillon, et la fluidité ou la masse moléculaire dudit échantillon.

5. Procédé selon l'une des revendications précédentes, **caractérisé en ce que** ledit traitement thermique appliqué sur ledit échantillon comprend les étapes suivantes :

   a) refroidir l'échantillon jusqu'à la température limite inférieure, et lorsque ladite température limite inférieure est équilibrée, maintenir l'échantillon à ladite température pendant au moins une durée prédéterminée, de préférence 5 minutes,
   b) réchauffer ledit échantillon jusqu'à la température limite supérieure,
   c) répéter les étapes a) et b) au moins une fois, de préférence au moins deux fois,
   d) refroidir ledit échantillon jusqu'à température ambiante.

6. Procédé selon la revendication 5, **caractérisé en ce que** le refroidissement et le chauffage sont réalisés à une vitesse constante comprise entre 5°C/min et 20°C/min, et de préférence à une vitesse de 10°C/min.

7. Procédé selon l'une des revendications précédentes, **caractérisé en ce que** préalablement à l'étape de comparaison, une étape supplémentaire consiste à éliminer du thermogramme, des tracés (r1, c1) correspondant respectivement au premier refroidissement, étape a, et au premier chauffage, étape b, dudit traitement thermique appliqué sur ledit échantillon.

8. Procédé selon la revendication 1, **caractérisé en ce que** la détermination de la forme dudit pic se fait au travers d'un facteur de forme (FF) du pic de cristallisation, dont l'obtention comporte les étapes consistant à :

   - déterminer une température du maximum (Tc) du pic de cristallisation,
   - déterminer des limites de calcul en température [Tc ; (Tc -X°C)] encadrant le versant descendant du pic de cristallisation,
   - dans lesdites limites de calcul déterminées, tracer une courbe représentant un rapport de température sur flux de chaleur (T/FC) en fonction de la température, puis
   - sur la courbe ainsi tracée, déterminer une valeur maximum [max(T /FC)] dudit rapport, et enfin
   - calculer une valeur de facteur de forme FF selon la formule suivante :

$$FF = \frac{\max(T/FC)}{Tc \, / \, \min(FC \, \text{à} \, (Tc\text{-}X°C))} *100 \; ;$$

où min (FC à (Tc-X°C)) représente une valeur minimum du flux de chaleur à la température limite (Tc-X°C) de calcul basse, et le paramètre X°C s'entendant d'une variable en température (degré Celsius), comprise entre 10°C et 50°C, de préférence entre 15°C et 30°C.

9. Procédé selon la revendication 8, **caractérisé en ce que** les limites de calcul encadrant le versant descendant du pic de cristallisation sont définies par la température du maximum (Tc) dudit pic et par une température limite basse (Tc-20°C) égale à ladite température du maximum (Tc) diminuée de 20°C.

10. Procédé selon l'une des revendications précédentes, **caractérisé en ce que** ladite zone (FU) de températures de fusion se présente sous forme d'un pic de fusion, et **en ce que** préalablement à l'étape de comparaison, une étape supplémentaire de caractérisation dudit pic de fusion consiste à déterminer une température minimum (Tf) dudit pic de fusion.

11. Dispositif d'analyse par calorimétrie différentielle comportant un module de supervision agencé pour piloter les étapes du procédé selon l'une des revendications 1 à 10.

12. Procédé de contrôle de la qualité d'un copolymère d'EVA utilisé dans la fabrication de câbles consistant à prélever un échantillon d'une masse comprise entre 2 et 15 mg, de préférence entre 6 et 12 mg, dudit copolymère et à soumettre ledit échantillon aux étapes du procédé de caractérisation selon l'une des revendications 1 à 10.

13. Procédé de contrôle de la qualité d'un copolymère d'EVA utilisé dans la fabrication d'un module photovoltaïque consistant à prélever un échantillon d'une masse comprise entre 2 et 15 mg, de préférence entre 6 et 12 mg, dudit copolymère et à soumettre ledit échantillon aux étapes du procédé de caractérisation selon l'une des revendications 1 à 10.

14. Procédé de contrôle de la tenue dans le temps d'un copolymère d'EVA utilisé dans la fabrication d'un module photovoltaïque consistant à prélever dans un module photovoltaïque ayant vieilli, un échantillon d'une masse comprise entre 2 et 15 mg, de préférence entre 6 et 12 mg dudit copolymère et à soumettre ledit échantillon aux étapes du procédé de caractérisation selon l'une des revendications 1 à 10.

**Patentansprüche**

1. Verfahren zum Kennzeichnen eines Vinylethylen- und Vinylacetat-Copolymers (EVA-Copolymer), das eine Analysetechnik mittels differentieller Kalorimetrie verwendet, **dadurch gekennzeichnet, dass** das Verfahren die Schritte umfasst, die darin bestehen:

- eine Probe des EVA-Copolymers einer Wärmebehandlung durch Temperaturanstiege und -abfälle mit konstanter Geschwindigkeit zwischen einer unteren Grenztemperatur von -80 °C und einer oberen Grenztemperatur von 120 °C, vorzugsweise zwischen -70 °C und 100 °C, zu unterwerfen, um ein Thermogramm zu erhalten,
- an dem erhaltenen Thermogramm eine Temperaturzone, die einer Zone (CR) von Kristallisationstemperaturen entspricht, abzulesen,
- die Kristallisationstemperatur-Zone (CR), die in Form einer Kristallisationsspitze gegeben ist, zu kennzeichnen, wobei die Spitze durch eine maximale Temperatur (Tc) der Spitze, eine Starttemperatur (Td) der Spitze, eine Temperatur (Tt) der Kreuzung von zwei tangentialen Geraden, die von der Spitze nach unten abfallen, und einen Formfaktor (FF) der Spitze bestimmt ist,
- die Kristallisationstemperatur-Zone (CR) mit einer entsprechenden Zone von Kristallisationstemperaturen in Referenz-Thermogrammen oder mit einer entsprechenden Temperaturzone von Kristallisationstemperaturen in Thermogrammen anderer Proben zu vergleichen,
- in Abhängigkeit vom Ergebnis des Vergleichs mehrere kennzeichnende Werte der Probe des EVA-Copolymers zu bestimmen, wovon einer ein Vernetzungsniveau der Probe ist und ein anderer ein Anteil des Vinylacetats der Probe ist.

2. Verfahren nach Anspruch 1, **dadurch gekennzeichnet, dass** in dem erhaltenen Thermogramm eine Glasübergangstemperatur-Zone (TV) und eine Schmelztemperaturzone (FU) abgelesen werden, um mit einer entsprechenden Zone von Glasübergangstemperaturen oder von Schmelztemperaturen in Referenz-Thermogrammen oder in Thermogrammen anderer Proben verglichen zu werden; wobei diese Zonen (TV) und (FU) wie die Zone (CR) den Gegenstand eines Kennzeichnungsschrittes bilden.

3. Verfahren nach Anspruch 1, **dadurch gekennzeichnet, dass** die untere Grenztemperatur -20 °C beträgt, derart, dass die Wärmebehandlung im Bereich von -20 °C bis 100 °C liegt.

4. Verfahren nach Anspruch 1, **dadurch gekennzeichnet, dass** unter den kennzeichnenden Werten der EVA-Copolymer-Probe, die am Ende des Vergleichsschrittes bestimmt werden, auch wenigstens einer der folgenden kennzeichnenden Werte ist: Anteil von Vinylacetat, das in der Probe vorhanden ist, und Fluidität oder molekulare Masse der Probe.

5. Verfahren nach einem der vorhergehenden Ansprüche, **dadurch gekennzeichnet, dass** die auf die Probe ausgeübte Wärmebehandlung die folgenden Schritte umfasst:

a) Kühlen der Probe bis zu der unteren Grenztemperatur und dann, wenn die untere Grenztemperatur stabil ist, Halten der Probe auf der Temperatur wenigstens während einer vorgegebenen Dauer, vorzugsweise während 5 Minuten,
b) erneutes Erwärmen der Probe bis auf die obere Grenztemperatur,
c) Wiederholen der Schritte a) und b) wenigstens einmal, vorzugsweise wenigstens zweimal,
d) Abkühlen der Probe bis auf Umgebungstemperatur.

6. Verfahren nach Anspruch 5, **dadurch gekennzeichnet, dass** die Abkühlung und die Erwärmung mit einer konstanten Geschwindigkeit im Bereich von 5 °C/min bis 20 °C/min und vorzugsweise mit einer Geschwindigkeit von 10 °C/min erfolgen.

7. Verfahren nach einem der vorhergehenden Ansprüche, **dadurch gekennzeichnet, dass** vor dem Vergleichsschritt ein zusätzlicher Schritt darin besteht, aus dem Thermogramm Spuren (r1, c1), die der ersten Abkühlung, Schritt a), und der ersten Erwärmung, Schritt b), der auf die Probe ausgeübten Wärmebehandlung entsprechen, zu beseitigen.

8. Verfahren nach Anspruch 1, **dadurch gekennzeichnet, dass** die Bestimmung der Form der Spitze über einen Formfaktor (FF) der Kristallisationsspitze erfolgt, deren Erhalt die Schritte umfasst, die darin bestehen:

- eine maximale Temperatur (Tc) der Kristallisationsspitze zu bestimmen,
- Berechnungsgrenzen der Temperatur [Tc; (Tc - X °C)], die die Abwärtsneigung der Kristallisationsspitze umgeben, zu bestimmen,
- innerhalb der bestimmten Berechnungsgrenzen eine Kurve zu verfolgen, die ein Verhältnis der Temperatur zu dem Wärmefluss (T/FC) als Funktion der Temperatur repräsentiert, dann
- auf der somit verfolgten Kurve einen Maximalwert [max(T/FC)] des Verhältnisses zu bestimmen und schließlich
- einen Wert des Formfaktors FF gemäß der folgenden Formel zu berechnen:

$$FF \frac{\max\left(T\ /\ FC\right)}{Tc/\min\left(FC\ bis\ \left(Tc - X\ °C\right)\right)} * 100,$$

wobei min(FC bis (Tc - X °C)) einen minimalen Wert des Wärmeflusses bei der unteren Grenztemperatur (Tc - X °C) der Berechnung repräsentiert und der Parameter X °C als eine Temperaturvariable (Grad Celsius), die im Bereich von 10 °C bis 50 °C und vorzugsweise von 15 °C bis 30 °C liegt, zu verstehen ist.

9. Verfahren nach Anspruch 8, **dadurch gekennzeichnet, dass** die Berechnungsgrenzen, die die Abwärtsneigung der Kristallisationsspitze umgeben, durch die maximale Temperatur (Tc) der Spitze und durch eine untere Grenztemperatur (Tc - 20 °C), die gleich der um 20 °C verringerten maximalen Temperatur (Tc) ist, definiert sind.

10. Verfahren nach einem der vorhergehenden Ansprüche, **dadurch gekennzeichnet, dass** die Schmelztemperatur-Zone (FU) die Form einer Schmelzspitze aufweist und dass vor dem Vergleichsschritt ein zusätzlicher Schritt des Kennzeichnens der Schmelzspitze darin besteht, eine minimale Temperatur (Tf) der Schmelzspitze zu bestimmen.

11. Vorrichtung zum Analysieren durch differentielle Kalorimetrie, die ein Überwachungsmodul umfasst, das dafür ausgelegt ist, die Schritte des Verfahrens nach einem der Ansprüche 1 bis 10 zu steuern.

12. Verfahren zum Steuern der Qualität eines EVA-Copolymers, das bei der Herstellung von Kabeln verwendet wird, das darin besteht, eine Probe des Copolymers mit einer Masse, die im Bereich von 2 bis 15 mg, vorzugsweise von 6 bis 12 mg, liegt, zu entnehmen und die Probe den Schritten des Kennzeichnungsverfahrens nach einem der Ansprüche 1 bis 10 zu unterwerfen.

13. Verfahren zum Steuern der Qualität eines EVA-Copolymers, das bei der Herstellung eines photovoltaischen Moduls verwendet wird, das darin besteht, eine Probe des Copolymers mit einer Masse, die im Bereich von 2 bis 15 mg, vorzugsweise von 6 bis 12 mg, liegt, zu entnehmen und die Probe den Schritten des Kennzeichnungsverfahrens nach einem der Ansprüche 1 bis 10 zu unterwerfen.

**14.** Verfahren zum Kontrollieren der zeitlichen Beständigkeit eines EVA-Copolymers, das bei der Herstellung eines photovoltaischen Moduls verwendet wird, das darin besteht, in einem photovoltaischen Modul, das gealtert ist, eine Probe des Copolymers mit einer Masse, die im Bereich von 2 bis 15 mg, vorzugsweise von 6 bis 12 mg, liegt, zu entnehmen und die Probe den Schritten des Kennzeichnungsverfahrens nach einem der Ansprüche 1 bis 10 zu unterwerfen.

**Claims**

**1.** A process for characterizing a copolymer of ethylene and vinyl acetate (EVA) using a differential calorimetry analysis technique, **characterized in that** said process comprises the steps consisting in:

- subjecting a sample of said EVA copolymer to a heat treatment, by temperature increases and decreases at constant rate, between a lower limit temperature of -80°C and an upper limit temperature of 120°C, preferably between -70°C and 100°C, to obtain a thermogram,
- on the thermogram obtained, detecting a temperature zone corresponding to a crystallization temperature zone (CR),
- characterizing the crystallization temperature zone (CR), presented in the form of a crystallization peak, said peak being determined by a maximum temperature (Tc) of said peak, a start temperature (Td) of said peak, a temperature of crossing (Tt) of two straight lines tangent to the descending slope of said peak and a shape factor (SF) of said peak,
- comparing said crystallization temperature zone (CR) with a corresponding crystallization temperature zone on reference thermograms, or with a corresponding temperature zone of crystallization temperatures on thermograms of other samples,
- as a function of the result of the comparison, determining one or more characteristic values of said sample of EVA copolymer, one of which is a degree of crosslinking of said sample and one is a vinyl acetate content of said sample.

**2.** The process as claimed in claim 1, **characterized in that**, on the thermogram obtained, a glass transition temperature zone (TV) and a melting temperature zone (FU) are detected to be compared, respectively, with a corresponding zone of glass transition temperatures or of melting temperature on reference thermograms or on thermograms of other samples: these zones (TV) and (FU) being, like the zone (CR), the subject of a characterization step.

**3.** The process as claimed in claim 1, **characterized in that** the lower limit temperature is -20°C such that the heat treatment is between -20°C and 100°C.

**4.** The process as claimed in claim 1, **characterized in that**, among the values of characteristics of said sample of EVA copolymer, determined after the comparison step, there is also at least one of the following values of characteristics: a vinyl acetate content present in said sample, and the fluidity or the molecular mass of said sample.

**5.** The process as claimed in one of the preceding claims, **characterized in that** said heat treatment applied to said sample comprises the following steps:

a) cooling the sample to the lower limit temperature, and, when said lower limit temperature is equilibrated, maintaining the sample at said temperature for at least a predetermined time, preferably 5 minutes,
b) heating said sample up to the upper limit temperature,
c) repeating steps a) and b) at least once, preferably at least twice,
d) cooling said sample to room temperature.

**6.** The process as claimed in claim 5, **characterized in that** the cooling and heating are performed at a constant rate of between 5°C/min and 20°C/min, and preferably at a rate of 10°C/min.

**7.** The process as claimed in one of the preceding claims, **characterized in that** prior to the comparison step, an additional step consists in eliminating from the thermogram plots (r1, c1) corresponding, respectively, to the first cooling, step a, and to the first heating, step b, of said heat treatment applied to said sample.

8. The process as claimed in claim 1, **characterized in that** the determination of the shape of said peak is performed by means of a shape factor (SF) of the crystallization peak, the obtention of which comprises steps consisting in:

- determining a maximum temperature (Tc) of the crystallization peak,
- determining calculation limits at elevated temperature [Tc; (Tc -X°C)] encompassing the descending slope of the crystallization peak,
- within said determined calculation limits, plotting a curve representing a ratio of temperature to heat flow (T/HF) as a function of the temperature, and then
- on the curve thus plotted, determining a maximum value [max(T /HF)] of said ratio, and finally
- calculating a shape factor SF value according to the following formula:

$$SF = \frac{max(T/HF)}{Tc / min (HF \text{ at } (Tc\text{-}X°C))} *100;$$

in which min (HF at (Tc-X°C)) represents a minimum value of the heat flow at the low calculation limit temperature (Tc-X°C), and the parameter X°C being a variable in temperature (Celsius degree), comprised between 10°C and 50°C, preferably between 15°C and 30°C.

9. The process as claimed in claim 8, **characterized in that** the calculation limits encompassing the descending slope of the crystallization peak are defined by the maximum temperature (Tc) of said peak and by a low limit temperature (Tc-20°C) equal to said maximum temperature (Tc) decreased by 20°C.

10. The process as claimed in one of the preceding claims, **characterized in that** said melting temperature zone (FU) is in the form of a melting peak, and **in that** prior to the comparison step, an additional step of characterization of said melting peak consists in determining a minimum temperature (Tf) of said melting peak.

11. A differential calorimetry analysis device comprising a supervision module arranged to control the steps of the process as claimed in one of claims 1 to 10.

12. A process for controlling the quality of an EVA copolymer used in the manufacture of cables, which consists in collecting a sample with a mass of between 2 and 15 mg, and preferably between 6 and 12 mg, of said copolymer and in subjecting said sample to the steps of the characterization process as claimed in one of claims 1 to 10.

13. A process for controlling the quality of an EVA copolymer used in the manufacture of a photovoltaic module, which consists in collecting a sample with a mass of between 2 and 15 mg, and preferably between 6 and 12 mg, of said copolymer and in subjecting said sample to the steps of the characterization process as claimed in one of claims 1 to 10.

14. A process for controlling the resistance over time of an EVA copolymer used in the manufacture of a photovoltaic module, which consists in collecting from a photovoltaic module which has aged, a sample with a mass of between 2 and 15 mg, and preferably between 6 and 12 mg, of said copolymer and in subjecting said sample to the steps of the characterization process as claimed in one of claims 1 to 10.

FIG.1A

FIG.1B

**FIG.1C**

**FIG.3**

FIG.2

FIG.4

FIG.5A

FIG.5B

FIG.5C

FIG.6

FIG.7

FIG.8

FIG.9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **BIANCHI, O. ; OLIVEIRA, R.V.B. ; FIORIO, R. ; DE N. MARTINS, J. ; ZATTERA, A.J. ; CANTO, L.B.** Assessment of Avrami, OZAWA and AVRAMI-OZAWA equations for determination of EVA crosslinking kinetics from DSC measurements. Polymer Testing, 2008, vol. 27, 722-729

- **J.A. REYES-LABARTA ; M.M. OLAYA ; A. MARCILLA.** *DSC and TGA study of the transitions involved in the thermal treatment of binary mixtures of PE and EVA copolymer with a crosslinking agent,* 2006